# EUROPÄISCHE PATENTSCHRIFT

(11) **EP 3 922 440 B1**
(45) Veröffentlichungstag und Bekanntmachung des Hinweises auf die Patenterteilung: **16.10.2024**
(21) Anmeldenummer: 21178097.8
(22) Anmeldetag: 07.06.2021
(51) Int. Cl.: B29C 64/393, B29C 64/282, B22F 10/30, B33Y 50/02, B33Y 10/00, B33Y 50/00, B22F 10/28, G06F 30/20, B29C 64/277, B22F 10/36

(54) **VERFAHREN ZUR GENERIERUNG EINES BESTRAHLUNGSSTEUERDATENSATZES FÜR EINE VORRICHTUNG ZUR ADDITIVEN FERTIGUNG**
METHOD FOR GENERATING AN IRRADIATION CONTROL DATA RECORD FOR A DEVICE FOR ADDITIVE PRODUCTION
PROCÉDÉ DE GÉNÉRATION D'UN ENSEMBLE DE DONNÉES DE COMMANDE DE RAYONNEMENT POUR UN DISPOSITIF DE FABRICATION ADDITIVE

(30) Priorität: 08.06.2020 DE 102020115208
(43) Veröffentlichungstag der Anmeldung: 15.12.2021
(73) Patentinhaber: EOS GmbH Electro Optical Systems, 82152 Krailling (DE)
(72) Erfinder: Orend, Jan, 82319 Starnberg (DE)
(74) Vertreter: Beckord & Niedlich Patentanwälte PartG mbB

(56) Entgegenhaltungen:
- DE-A1- 102017 205 051

## Beschreibung

Die Erfindung betrifft ein Verfahren zur Generierung eines Bestrahlungssteuerdatensatzes zur additiven Fertigung einer Anzahl von Fertigungsprodukten bzw. Bauteilen in einem Fertigungsprozess. Insbesondere umfasst die Erfindung ein Verfahren zur Generierung eines Bestrahlungssteuerdatensatzes zur Erstellung von Steuerdaten für eine Vorrichtung zur additiven Fertigung zumindest einer Anzahl von Bauteilen in einem Fertigungsprozess, in welchem wenigstens eine Schicht eines Aufbaumaterials in einen Prozessraum eingebracht wird und das Aufbaumaterial der Schicht durch Bestrahlung von zumindest einem Teilbereich der Schicht unter Verwendung einer Mehrzahl von Bestrahlungsressourcen, z.B. Lasern selektiv zu Bauteilschichten verfestigt wird. Weiterhin betrifft die Erfindung einen entsprechenden Bestrahlungssteuerdatensatz, ein Verfahren zur additiven Fertigung, eine entsprechende Steuerdatenerzeugungsvorrichtung, eine Vorrichtung zur additiven Fertigung einer Anzahl von Fertigungsprodukten sowie entsprechende Steuerdaten. Eine Vorrichtung zur additiven Fertigung wird im Folgenden auch kurz als Fertigungsvorrichtung oder Maschine bezeichnet.

Bei der Herstellung von Prototypen und inzwischen auch in der Serienfertigung werden additive Fertigungsprozesse immer relevanter. Im Allgemeinen sind unter "additiven Fertigungsprozessen" solche Fertigungsprozesse zu verstehen, bei denen, in der Regel auf Basis von digitalen 3D-Konstruktionsdaten, durch das Anlagern von Material ein Fertigungsprodukt bzw. Bauteil aufgebaut wird. Der Aufbau erfolgt dabei meist, aber nicht zwingend, schichtweise. Als ein Synonym für die additive Fertigung wird häufig auch der Begriff "3D-Druck" verwendet, die Herstellung von Modellen, Mustern und Prototypen mit additiven Fertigungsprozessen wird oft als "Rapid Prototyping" und die Herstellung von Werkzeugen als "Rapid Tooling" bezeichnet. Wie eingangs erwähnt, ist ein Kernpunkt die selektive Verfestigung des Aufbaumaterials, wobei diese Verfestigung bei vielen Fertigungsprozessen mit Hilfe einer Bestrahlung mit Strahlungsenergie, z.B. elektromagnetischer Strahlung, insbesondere Licht- und/oder Wärmestrahlung, aber ggf. auch mit Teilchenstrahlung, wie z.B. Elektronenstrahlung, erfolgen kann. Beispiele für mit einer Bestrahlung arbeitende Verfahren sind das "selektive Lasersintern" oder "selektive Laserschmelzen". Dabei werden wiederholt dünne Schichten eines meist pulverförmigen Aufbaumaterials übereinander aufgebracht und in jeder Schicht wird das Aufbaumaterial durch räumlich begrenztes Bestrahlen der Stellen, die nach der Fertigung zum herzustellenden Fertigungsprodukt gehören sollen, selektiv verfestigt, indem die Pulverkörner des Aufbaumaterials mit Hilfe der durch die Strahlung an dieser Stelle lokal eingebrachten Energie teilweise oder vollständig aufgeschmolzen werden. Nach einer Abkühlung sind diese Pulverkörner dann miteinander in einem Festkörper verbunden.

Viele solche Systeme arbeiten mit einer einzigen Bestrahlungsressource, beispielsweise einer Lasereinheit mit einem Scanner-Spiegelsystem, mit der ein Laserstrahl zur selektiven Verfestigung über eine Schicht verfahren werden kann. Um höhere Prozessgeschwindigkeiten zu erreichen, ist es vorteilhaft, parallel mehrere Bestrahlungsressourcen einzusetzen. Ein Beispiel hierfür wird in der WO 2016/110440 A1 beschrieben.

Das Dokument DE 10 2017 205051 A1 offenbart ein computergestütztes Verfahren zur Generierung eines Steuerdatensatzes für eine generative Schichtbauvorrichtung zur Herstellung eines dreidimensionalen Objekts mittels derselben; bei der Herstellung wird eine Mehrzahl von Strahlbündeln auf unterschiedliche Regionen einer aufgetragenen Schicht aus Aufbaumaterial für das Objekt gerichtet.

Bei solchen "Multiscannermaschinen" ist es bisher häufig so, dass jeder der Bestrahlungsressourcen ein bestimmter Bereich im Prozessraum fest zugeordnet ist, d. h. die Oberfläche der jeweils zu bearbeitenden Schicht ist in feststehende Bereiche aufgeteilt und jede der Bestrahlungsressourcen ist über die gesamte Bauhöhe des zu fertigenden Bauteils, d. h. in der Aufbaurichtung im Prozessraum über alle Schichten hinweg einem dieser Bereiche fest zugeordnet. Nur in einem Grenzbereich kann gegebenenfalls mehr als eine der Bestrahlungsressourcen genutzt werden. Beispielsweise wird bei einer Vierscannermaschine die Schicht jeweils in vier Quadranten aufgeteilt und es gibt einen kreuzförmigen Überlappbereich, wobei nur in der Mitte alle vier Bestrahlungsressourcen bzw. Scanner arbeiten können. Derartige Maschinen mit mehreren Bestrahlungsressourcen sind zwar grundsätzlich schneller als Maschinen mit nur einer Bestrahlungsressource, jedoch hat die feste Zuordnung der Bestrahlungsressourcen zu bestimmten Schichtbereichen den Nachteil, dass die verschiedenen Bestrahlungsressourcen je nach zu fertigendem Bauteil bzw. parallel zu fertigenden Bauteilen ungleichmäßig ausgelastet sind und daher die Geschwindigkeit des Aufbaus einer Schicht immer davon abhängt, wie lange die Bestrahlungsressource benötigt, welche in der aktuellen Schicht am meisten gefordert ist. Sofern sämtliche Bestrahlungsressourcen so aufgebaut und angeordnet sind, dass sie im Prinzip jeden Bereich einer Schicht innerhalb des Prozessraums erreichen könnten, wäre zwar grundsätzlich eine größere Flexibilität gegeben. Jedoch wird aber auch hier vor Beginn des Fertigungsprozesses eine Bestrahlungsstrategie festgelegt, in der den Bestrahlungsressourcen vorab festbestimmte Schichtbereiche zugewiesen werden, also beispielsweise wieder eine Aufteilung in Quadranten, rein nach Bauteilen oder ähnlichem.

Bei Maschinen mit mehreren Bestrahlungsressourcen können einige oder alle Bauteile von mehreren Bestrahlungseinheiten bestrahlt werden. Die Bestrahlung einer Schicht unter selektiver Verfestigung von Bauteilquerschnitten soll in der Regel in einer möglichst kurzen Zeit erfolgen. Dabei haben die Aufteilung der zu bestrahlenden Flächen, die Bestrahlungsreihenfolge und die Zuordnung zwischen den Arbeitspaketen und den Bestrahlungsressourcen, z. B. Laser-/Scannereinheiten, einen Einfluss auf die Bauteilgüte. Es entstehen dabei häufig Zielkonflikte, die die Herstellung verzögern oder die bestimmte Qualitätseigenschaften der Bauteile negativ beeinflussen können.

Es ist eine Aufgabe der vorliegenden Erfindung, ein verbessertes bzw. alternatives Steuerungsverfahren bzw. eine Steuervorrichtung für eine Vorrichtung zur additiven Fertigung zur Verfügung zu stellen, die bevorzugt eine Möglichkeit zur weiteren Beschleunigung des Fertigungsprozesses bieten, sowie ein Verfahren und eine Fertigungsvorrichtung zur Verfügung zu stellen, bei denen diese Steuerung genutzt wird.

Diese Aufgabe wird durch ein Verfahren nach Anspruch 1, einen entsprechenden Bestrahlungssteuerdatensatz nach Anspruch 10, durch ein Verfahren zur additiven Fertigung nach Anspruch 11, durch eine Steuerdatenerzeugungsvorrichtung nach Anspruch 12 sowie durch eine Vorrichtung zur additiven Fertigung gemäß Anspruch 13, Steuerdaten nach Anspruch 14 und durch ein Computerprogrammprodukt nach Anspruch 15 gelöst.

Das erfindungsgemäße Verfahren dient zur Generierung eines Bestrahlungssteuerdatensatzes. Dieser Bestrahlungssteuerdatensatz dient wiederum zur Erstellung von Steuerdaten für eine Vorrichtung zur additiven Fertigung einer Anzahl von Bauteilen (mindestens einem Bauteil, aber auch mehrerer Bauteile) in einem Fertigungsprozess. In einem solchen Fertigungsprozess wird wenigstens eine Schicht eines Aufbaumaterials in einen Prozessraum eingebracht und durch Bestrahlung von zumindest einem Teilbereich der Schicht zu mindestens einer Bauteilschicht verfestigt. Das Aufbaumaterial kann pastös oder pulverförmig sein, z.B. ein metallbasiertes oder polymerbasiertes Pulver. Die Verfestigung erfolgt selektiv unter Verwendung einer Mehrzahl von Bestrahlungsressourcen, wobei mehrere, bevorzugt mindestens zwei, weiter bevorzugt mindestens drei, besonders bevorzugt mindestens vier, Bestrahlungsressourcen angesteuert bzw. genutzt werden.

Es wird also mindestens ein Bauteil aus mindestens einer Bauteilschicht, in der Regel jedoch aus einer Vielzahl von Bauteilschichten, gefertigt. Dabei können auch mehrere Bauteile gefertigt werden, in dem ihre jeweiligen Bauteilschichten in der jeweiligen Schicht des Aufbaumaterials durch die Bestrahlungsressourcen an den entsprechenden Stellen verfestigt werden. Jede Bauteilschicht kann dabei in Schichtsegmente unterteilt werden. Diese Unterteilung in Schichtsegmente kann auf verschiedenen Strukturen einer Bauteilschicht basieren (z.B. Kontur, DownSkin, UpSkin, InFill) oder einer Unterteilung von Arbeitsschritten zur Erstellung der Bauteilschicht (wenn ein Sprung erfolgt, also die jeweilige Bestrahlungsressource abgeschaltet und gleichzeitig ein Zielort der Bestrahlung verlagert wird, erfolgt eine Unterteilung). Die Schichtsegmente entsprechen also geometrischen Anordnungen von schichtförmigen Verfestigungen eines Aufbaumaterials bzw. von schichtförmigen geometrischen Formen. Jedem Schichtsegment kann (mindestens) ein "Arbeitspaket" zugeordnet werden. Ein solches Arbeitspaket ist eine verfahrenstechnische Repräsentation eines Schichtsegments und stellt z.B. eine Menge aus Arbeitsschritten zur Erstellung des entsprechenden Schichtsegments oder ein abstraktes Objekt dieses Schichtsegments in einem Arbeitsablauf dar.

Ein Arbeitspaket kann z.B. einer Kontur eines Bauteils zugeordnet sein. Diese Kontur ist ein Schichtsegment der äußeren Umrandung eines Bauteils, insbesondere eines geschlossenen Bauteilquerschnitts. Andere Arbeitspakete können dem InFill der Bauteilschicht zugeordnet sein. Der Begriff InFill bezeichnet dabei eine Füllung des von der Kontur umrandeten Bauteilquerschnitts. Wieder andere Arbeitspakete können den Schichtsegmenten UpSkin oder DownSkin zugeordnet sein, die jeweils eine Füllung innerhalb der Kontur sind, unter Umständen aber auch ein Teil der Kontur sein können. Als DownSkin wird dabei ein zu verfestigender oder verfestigter Bereich eines Bauteils bezeichnet, der an nicht zu verfestigendes bzw. loses Aufbaumaterial angrenzt, welches während des Bauprozesses unterhalb des zu verfestigenden oder verfestigten Aufbaumaterials angeordnet wird. Als UpSkin wird ein zu verfestigender oder verfestigter Bereich eines Bauteils bezeichnet, der an nicht zu verfestigendes bzw. loses Aufbaumaterial angrenzt, welches während des Bauprozesses oberhalb des verfestigten Aufbaumaterials angeordnet wird. Die Begriffe Kontur, InFill, DownSkin und UpSkin können alternativ oder zusätzlich jeweils eine definierte Methode der selektiven Verfestigung des so bezeichneten Bereichs, z. B. einen charakteristischen Satz von Bestrahlungsparameterwerten, umfassen. Ein Arbeitspaket kann z.B. der arbeitstechnischen Repräsentation einer Kontur entsprechen (dem datentechnischen Objekt "Kontur, Bauteil X, Schicht Y, Position") oder auch der Abfolge von konkreten Arbeitsschritten zur Erstellung dieser Kontur.

Eine Bestrahlungsressource kann basierend auf einem Arbeitspaket beispielsweise eine vollständige Kontur eines Bauteilquerschnitts in einer Schicht verfestigen, entweder direkt mit den durch das Arbeitspaket bereitgestellten Arbeitsschritten oder mittels Arbeitsschritten, welche von dem entsprechenden Arbeitspaket abgeleitet werden.

Unter einer Bestrahlungsressource ist hierbei ein separat steuerbarer Strahl bzw. Strahlungsemissionsort zu verstehen. Als Strahlungsemissionsort kann dabei auch z. B. ein ansteuerbares Spiegelsystem (der sogenannte Scanner) zu verstehen sein, d. h. dass beispielsweise eine Strahlungsquelle mehrere solcher Spiegelsysteme versorgt. Grundsätzlich kann aber auch jede Bestrahlungsressource eine eigene Strahlungsquelle aufweisen mit einem zugehörigen Scanner. Die Verwendung separater Strahlungsquellen für die einzelnen Bestrahlungsressourcen, also beispielsweise der Aufbau jeder Bestrahlungsressource mit einem eigenen Scanner und einem eigenen Laser, hat den Vorteil, dass keine Strahlteiler oder dergleichen verwendet werden müssen und beispielsweise beim Ausfall einer Strahlungsquelle nicht mehrere Bestrahlungsressourcen hiervon betroffen sind. Dennoch kann in manchen Fällen eine Verwendung einer einzigen Strahlungsquelle für mehrere Bestrahlungsressourcen aus Kosten- und/oder Platzgründen vorteilhaft sein. Bevorzugte Bestrahlungsquellen sind hier lichtemittierende Bestrahlungsquellen wie Laser.

Eine bevorzugte Bestrahlungsressource umfasst eine Strahlquelle, z.B. einen Laser oder eine Elektronenstrahlquelle, welche in der Lage ist, einen Strahl zu erzeugen, der das Aufbaumaterial verfestigen kann, einen Scanner und oftmals auch eine optische Einrichtung zur Bündelung der Strahlen. Ein Scanner ist ein optisches Gerät, mit dem ein Strahl abgelenkt werden kann. Ein Scanner kann dabei mehrere Ablenkeinrichtungen umfassen, um den Strahl in mehreren Achsen ablenken zu können. Bei ausreichender Leistung der Strahlenquelle und Bündelung der Strahlen auf einen bestimmten "Punkt" (d. h. eine bestimmte Stelle) einer Schicht wird das Aufbaumaterial aufgeschmolzen. Durch Änderung der Ablenkung des Scanners kann der Punkt in der Ebene der Schicht bewegt werden. Dabei kann entlang der Trajektorie dieses Punktes eine Spur aus aufgeschmolzenem oder gesintertem Aufbaumaterial entstehen. Diese Spur wird auch als "Schmelzspur" bezeichnet. Die Geschwindigkeit, mit der sich der Punkt in der Ebene der Schicht bewegt, wird auch als "Scangeschwindigkeit" bezeichnet.

Die Bauteilschichten bzw. die Schichtsegmente werden in Form eines Bestrahlungsmusters von der Bestrahlungsressource bestrahlt, Ein Bestrahlungsmuster ist eine geometrische Anordnung von Schmelzbahnen, mit der eine geometrische Form abgefahren oder ausgefüllt wird. Dies kann zum Beispiel eine Ausfüllung einer Fläche mit einem Linienmuster sein (z.B. für einen UpSkin- oder DownSkin-Bereich), oder eine Bahn entlang der Bauteiloberfläche (z.B. für eine Kontur). Dieses Bestrahlungsmuster kann in Form von Bestrahlungsparametern realisiert werden. Unter dem Begriff "Bestrahlungsparameter" wird eine abstrakte Beschreibung eines Bestrahlungsmusters verknüpft mit Parametern zur Generierung von Steuerungsbefehlen verstanden. Dies können sowohl konstante Leistungsvorgaben und Scangeschwindigkeiten sein, als auch als Funktionen vorgegebene Generierungsvorschriften. Der Begriff Bestrahlungsparameter umfasst also im Rahmen dieser Anmeldung auch konkrete Bestrahlungsparameterwerte. Ein Bestrahlungsmuster kann ein einfaches Verfahren der Ablenkung des Scanners entlang einer Trajektorie in einer Vorschubrichtung sein, kann aber auch eine Substruktur enthalten (z.B. "ein Hatching"). Zur Verfestigung zumindest eines Teilbereichs der Schicht wird dort oftmals die Bestrahlungsstelle gemäß den Steuerdaten entlang einer Anzahl von Scanlinien bewegt, welche innerhalb eines Bestrahlungsstreifens, beispielsweise wie eine Schraffur, angeordnet sind, weshalb diese Scanlinien auch als "Hatchlinien" bezeichnet werden.

Mit dem Begriff "Vorschubrichtung" ist dabei die Richtung gemeint, mit der die Trajektorie ohne eine Substruktur abgefahren wird/würde. Damit ist unter dem Begriff die Ausbreitungsrichtung der Verfestigung entlang des Verlaufs des tatsächlich verfestigten Bestrahlungsstreifens während der Herstellung der Bauteilschicht zu verstehen. Vorzugsweise erfolgt der Vorschub der Verfestigung in einer Richtung entlang der Längsausdehnung des Bestrahlungsstreifens. Die Vorschubrichtung beschreibt dabei die Ausbreitung bzw. das Voranschreiten der Verfestigung auf einer Makroebene, d. h. auf der Ebene des gesamten Bestrahlungsstreifens. Der Begriff Vorschubrichtung bezieht sich insbesondere nicht auf eine Mikroebene der Verfestigung, d. h. auf die Bewegung der Bestrahlungsstelle entlang der einzelnen Scanlinien innerhalb eines Bestrahlungsstreifens. Mit anderen Worten bewirkt beim Hatching eine Bewegung der Bestrahlungsstelle entlang der Scanlinien auf einer Mikroebene den Vorschub der Verfestigung entlang des Bestrahlungsstreifens auf einer Makroebene.

Ein Arbeitspaket kann solche Bestrahlungsparameter umfassen oder Daten enthalten, mittels denen Bestrahlungsparameter generiert werden können. Beispielsweise enthält ein Arbeitspaket eine abstrahierte Form von Fahrbefehlen für einen Scanner und zeitlich oder räumlich zugeordnete Sollleistungen für eine Strahlenquelle. Einem Arbeitspaket kann ein Bestrahlungsparameter zugeordnet werden. Für ein Arbeitspaket können für eine bestimmte Bestrahlungsressource Steuerbefehle zur Bestrahlung einer Abfolge von Schmelzspuren erzeugt werden.

Das erfindungsgemäße Verfahren umfasst die folgenden Schritte:
a) Bereitstellung von Schichtdaten umfassend Daten zum Aufbau von Schichtsegmenten für eine Bauteilschicht.

Diese Schichtdaten umfassen Daten, aus denen sich Steuerdaten zur Erstellung von Schichtsegmenten für eine Bauteilschicht ermitteln lassen, insbesondere Bestrahlungsparameter oder Daten, aus denen Bestrahlungsparameter ermittelt werden können. Die Schichtdaten können beispielsweise geometrische Daten umfassen, z.B. Informationen über einen Querschnitt eines Bauteils, dessen Umriss durch Koordinatenpunkte in x-/y-Ebene, d.h. einer virtuellen Ebene parallel zum realen Baufeld der Fertigungsvorrichtung, gebildet wird. Jede Ebene bzw. Schicht trägt dabei eine individuelle z-Koordinate. Die Schichtdaten können darüber hinaus außerdem Richtungsinformationen zum Abtasten durch einen zur Verfestigung verwendeten Strahl, Leistung/Geschwindigkeit des Strahls und Abstand zwischen Trajektorien und weitere Daten umfassen.
b) Aufteilung der Schichtdaten auf mehrere Arbeitspakete unter Bildung einer Grundmenge der Arbeitspakete.

Jedem Schichtsegment wird dabei mindestens ein Arbeitspaket zugeordnet, wobei jedes Arbeitspaket einem Schichtsegment zugeordnet ist, einem Schichtsegment jedoch mehrere Arbeitspakete zugeordnet sein können. Beispielsweise kann ein Schichtsegment eine durchgängige Kontur sein, dann ist es bevorzugt, dieser Kontur ein Arbeitspaket zuzuordnen. Ein Schichtsegment kann aber auch ein InFill einer Kontur sein, bei dem mehrfach abgesetzt wird (beispielsweise wird der Strahl ausgeschaltet und der Scanner verfahren), wobei in diesem Fall bevorzugt jeder Teil nach einem Absetzen ein eigenes Arbeitspaket ist und alle diese Arbeitspakete dem Schichtsegment zugeordnet sind. Wie oben angedeutet kann ein Arbeitspaket eine Abfolge von Befehlen zur Ansteuerung eines Lasers und des Scanners oder alternativ eines Elektronenstrahls und eines Ablenkfeldes (also einer Bestrahlungsressource) umfassen. Ein Arbeitspaket kann also die Befehlsfolge für ein Bauteil oder auch einen Teilbereich eines Bauteils darstellen, z.B. können Bereiche mit unterschiedlichen Bestrahlungsmustern oder unterschiedlicher Parametrierung (Scangeschwindigkeit, Leistung, ggf. Intensitätsverteilung) als getrennte Arbeitspakete betrachtet werden. Im Sinne des Verfahrens kann ein Arbeitspaket jedoch auch ein datentechnisches Objekt sein, welches stellvertretend für die vorgenannte Abfolge von Befehlen steht.

Eine Unterteilung eines Schichtsegments in mehrere Arbeitspakete ist insbesondere dann von Vorteil, wenn dieses aufgrund der geometrischen Ausdehnung und/oder Bearbeitungsdauer weiter unterteilt werden sollte, z. B. wenn bei einer Bestrahlung in Form eines Streifenmusters eine vorgegebene maximale Streifenlänge überschritten wird, oder beim Überschreiten vorgegebener Arbeitsbereiche von Bestrahlungsressourcen. Bevorzugt werden nur Unterteilungen durchgeführt, bei denen keine durchgezogenen Scanlinien (Scanvektoren, Trajektorien) aufgetrennt werden müssen, d.h. die Aufteilung erfolgt bevorzugt an Stellen, an denen der Laser für einen Sprung zum nächsten Linienzug abgeschaltet wird. Dadurch entstehen in den meisten Fällen keine verkürzten Scanvektoren innerhalb eines Streifens.

Alle Arbeitspakete können initial Teil der Grundmenge aller Arbeitspakete sein und sind bevorzugt auch initial Teil der Grundmenge, wobei diese Grundmenge insbesondere eine Ordnung dieser Arbeitspakete umfassen kann, z.B. in Form eines gerichteten Graphen. Diese Grundmenge wird im Verlauf des Verfahrens um Arbeitspakete reduziert, die dann Arbeitspaketgruppen zugewiesen und aus der Grundmenge entfernt werden. Dies führt vorteilhaft dazu, dass Schichtdaten in Form von Arbeitspaketen auf mehrere Bestrahlungsressourcen verteilt werden können.
c) Bereitstellung einer fest definierten Reihenfolgerelation für die Arbeitspakete.

Diese Reihenfolgerelation umfasst die einzuhaltende Reihenfolge für unterschiedliche Schichtsegmente eines Bauteils (z.B. zuerst Konturen, dann DownSkin oder UpSkin und zuletzt InFill) und stellen insbesondere allgemeine Regeln zum Ordnen von Arbeitspaketen dar. Für die Bestrahlung unterschiedlicher Segmente (Kontur, UpSkin, DownSkin, InFill) kann je nach Material die Einhaltung einer bestimmten Reihenfolge vorteilhaft sein. Insbesondere kann z.B. eine Verbesserung der Oberflächenqualität eines Bauteils erzielt werden, wenn Bereiche an der Oberfläche zuerst bestrahlt bzw. verfestigt werden. Aus dieser vorgegebenen Reihenfolge ergeben sich zwischen den Arbeitspaketen abhängig von ihrer Zugehörigkeit zu den unterschiedlichen Bereichen Abhängigkeiten. Eine bevorzugte Reihenfolgerelation kann einen gerichteten Graphen umfassen, der die Arbeitsreihenfolge von Schichtsegmenten umfasst oder Regeln, welche Art von Schichtsegmenten bzw. Arbeitspaketen vor anderen Schichtsegmenten bzw. Arbeitspaketen erledigt sein müssen (z.B. "Erst Kontur, dann InFill").
d) Festlegung einer Bearbeitungsreihenfolge der Arbeitspakete basierend zumindest auf der Reihenfolgerelation.

Nach diesem Schritt ist bekannt, welche Arbeitspakete vor anderen Arbeitspaketen durchgeführt werden müssen. Der Schritt resultiert dabei bevorzugt in einem einfach gerichteten Graphen der Arbeitspakete (also einem Graphen ohne Schleifen). Dieser Graph kann als neue Grundmenge angesehen werden, er kann aber auch als Repräsentation der Grundmenge für weitere Schritte angesehen werden. Bevorzugt wird der gerichtete Graph zusätzlich zur Grundmenge erstellt. Dies hat insbesondere den Vorteil, dass dann Arbeitspakete berücksichtigt werden können, die zu einem für das Verfahren relevanten Zeitpunkt noch nicht abgearbeitet, aber bereits zugeordnet sind. Die zugeordneten Arbeitspakete können dann aus der Grundmenge gelöscht sein, aber im Graphen noch vorhanden sein (und die nachfolgenden Arbeitspakete "blockieren". Es können dann im Folgenden nur Arbeitspakete betrachtet werden, die sowohl im Graphen als auch in der Grundmenge enthalten sind (also gerade nicht die noch nicht abgearbeiteten Arbeitspakete sowie die davon abhängigen Arbeitspakete). Ein Vorteil des Merkmals ist eine Verbesserung von Bauteileigenschaften, z. B. hinsichtlich der Oberflächenstruktur.
e) Ermittlung einer (zu erwartenden) Erledigungszeit für jede der Bestrahlungsressourcen für jeweils diejenige Arbeitspaketgruppe der Arbeitspakete, die diesen Bestrahlungsressourcen bereits vorher zugeordnet worden sind.

Jede Arbeitspaketgruppe umfasst die Arbeitspakete für eine Bestrahlungsressource, die dieser bereits zugeordnet worden sind und ggf. auch Wartezeiten und kann natürlich auch kein Element enthalten, wenn noch kein Arbeitspaket zugeordnet worden ist. Die Erledigungszeit ist diejenige Zeitdauer, die eine Bestrahlungsressource zur Abarbeitung der Arbeitspakete benötigt und umfasst die Zeit, die jedes der enthaltenen Arbeitspakete benötigt und ggf. zusätzlich eingefügte Wartezeiten. In der Regel sind die Erledigungszeiten für unterschiedliche Bestrahlungsressourcen unterschiedlich, sie können aber auch gleich sein, insbesondere zu Beginn, wenn die Erledigungszeit 0 ist.

Zur Ermittlung der Erledigungszeit kann im Vorfeld für jedes Arbeitspaket oder zumindest für eine Gruppe von Arbeitspaketen eine Ermittlung der zur Erledigung der Arbeitspakete jeweils benötigten Zeitdauer erfolgen. Dies ist z.B. die zur Bestrahlung benötigte Zeit, ggf. inklusive Sprungzeiten zwischen zu verfestigenden Trajektorien eines Arbeitspakets, während welcher keine Bestrahlung stattfindet. Die Zeit kann vorher abgeschätzt werden oder durch Simulation je nach Zuordnung der Arbeitspakete zu den Bestrahlungsressourcen ermittelt werden. Dieser Schritt ist zur Ermittlung der Erledigungszeit bevorzugt, jedoch nicht unbedingt notwendig, da diese auch jeweils aus den Arbeitspaketgruppen immer wieder neu ermittelt werden kann.
f) Auswahl einer Bestrahlungsressource unter Berücksichtigung der für sie ermittelten Erledigungszeit, vorzugsweise derjenigen Bestrahlungsressource mit der jeweils kürzesten ermittelten Erledigungszeit (also dem frühesten Erledigungszeitpunkt).

Es wird also eine Bestrahlungsressource ausgewählt, bevorzugt diejenige, die zum jeweils aktuellen Stand der Verteilung der Arbeitspakete als erstens fertig ist. Sollten dafür mehrere Bestrahlungsressourcen mit gleicher kürzester Erledigungszeit infrage kommen, dann kann eine der Bestrahlungsressourcen basierend auf anderen Parametern ausgesucht werden, z.B. zufällig, aufgrund der Position oder des zuletzt bearbeiteten Bauteils.

Je nach der ermittelten kürzesten Erledigungszeit kann eine Prüfung erfolgen, ob in einem Fertigungsverfahren die in Schritt d) geordneten Arbeitspakete auch alle bereits abgearbeitet werden können. Beispielsweise kann der Fall auftreten, dass zu dem betreffenden Zeitpunkt eine Gruppe von Arbeitspaketen noch gar nicht durchgeführt werden kann, weil ein zwingend vorausgehendes Arbeitspaket noch von einer anderen Bestrahlungsressource bearbeitet wird und noch nicht fertiggestellt ist. Die betreffenden Arbeitspakete können dann aus der Bearbeitungsreihenfolge entnommen oder ihre Auswahl gesperrt werden. Ein Vorteil des Merkmals ist die Reduzierung der Bauzeit durch eine Verbesserung der Auslastung der Bestrahlungsressourcen.
g) Ermittlung einer Auswahlmenge von Arbeitspaketen aus der Grundmenge der Arbeitspakete, basierend auf der Reihenfolgerelation, wobei die Auswahlmenge diejenigen Arbeitspakete umfasst, welche gemäß der Bearbeitungsreihenfolge bearbeitet werden können.

In diesem Schritt werden also diejenigen Arbeitspakete in einer Auswahlmenge zusammengefasst, die überhaupt zu dem betreffenden Zeitpunkt bearbeitet werden dürfen. Bevorzugt findet dabei auch eine Filterung statt, ob auch alle notwendigen Arbeitspakete bei einem realen Verfahren schon abgearbeitet werden konnten (s.o.) bzw. ob Benutzervorgaben existieren, die eine Bearbeitung eines Arbeitspakets untersagen oder fordern. Es können in diesem Schritt auch noch weitere Filterungen durchgeführt werden, z.B. ob Arbeitspakete von der ausgewählten Bestrahlungsressource überhaupt bearbeitet werden dürfen. Die Auswahlmenge enthält also diejenigen Arbeitspakete, die zu der ermittelten kürzesten Erledigungszeit abgearbeitet werden können, zumindest basierend auf der Reihenfolgerelation. Ein Vorteil des Merkmals ist die Verbesserung der Auslastung der Bestrahlungsressourcen unter Einhaltung der Reihenfolgerelation, die wiederum zu einer Verbesserung von Bauteileigenschaften führt.
h) Auswahl eines Arbeitspakets aus der Auswahlmenge unter Berücksichtigung eines vorgegebenen Bewertungsregelwerks.

Es kann dabei ein einziges Arbeitspaket ausgewählt werden aber auch eine Gruppe von Arbeitspaketen, wobei die Auswahl eines einzigen Arbeitspakets bevorzugt ist. Die Auswahl erfolgt dabei auf der Basis des Bewertungsregelwerks. Dieses Bewertungsregelwerk dient der Bewertung von Arbeitspaketen im Hinblick auf eine Auswahl. Es wird also ein Arbeitspaket aus der Arbeitsmenge ausgewählt, was am besten geeignet ist. Es ist dabei bevorzugt, dass auf Basis des Bewertungsregelwerks den Arbeitspaketen der Auswahlmenge ein individueller Bewertungswert zugeordnet wird. Dieser Bewertungswert kann sich beispielsweise danach richten, in welchem Maß die ausgewählte Bestrahlungsressource zur Durchführung des betreffenden Arbeitspakets geeignet ist. Er kann sich aber auch aus der Position des jeweiligen Arbeitspakets in Relation zu anderen Arbeitspaketen ergeben, die zur vorliegenden Zeit von anderen Bestrahlungsressourcen bearbeitet werden, und es kann eine Wertung abgegeben werden, inwiefern Rauch über der Schicht die Durchführung des jeweiligen Arbeitspakets beeinträchtigen wird. In einem sehr einfachen Fall könnte das Bewertungsregelwerk vorgeben: "Nimm einfach das nächste Arbeitspaket der Auswahlmenge". Durch die Auswahl aus der Auswahlmenge ist sichergestellt, dass das Arbeitspaket zu dem vorliegenden Zeitpunkt (zum Zeitpunkt der kürzesten Erledigungszeit) auch durchgeführt werden darf.

Bevorzugt werden für die Auswahl des für die Zuweisung am besten geeigneten Arbeitspaketes (aufgrund der Bewertung) die unterschiedlichen Arbeitspakete der Auswahlmenge miteinander verglichen. Voraussetzung hierfür ist die Definition eines Vergleichsoperators, der es erlaubt, die Aussage zu treffen, ob die Zuweisung eines Arbeitspaketes sinnvoller ist, als die Zuweisung eines anderen. Dieser Vergleichsoperator ergibt sich aus dem Bewertungsregelwerk. Der Vergleich kann im einfachsten Fall zwei numerische Bewertungen miteinander umfassen, es ist aber auch möglich, diesen Vergleich z.B. anhand einer Liste mit Prioritäten durchzuführen oder anhand einer Klassifizierung. Findet eine numerische Bewertung statt, kann den ausgewählten Arbeitspaketen ein Wert gemäß ihrer Bewertung zugeordnet werden. Ist die Güte einer Bewertung mit einem hohen Wert verknüpft, wird bevorzugt dasjenige Arbeitspaket mit dem höchsten Wert ausgewählt. Ist die Güte einer Bewertung mit einem niedrigen Wert verknüpft, wird bevorzugt dasjenige Arbeitspaket mit dem niedrigsten Wert ausgewählt.

Es gibt mannigfaltige Varianten von Kriterien für einen Vergleich, wobei besonders wichtige Kriterien hinsichtlich ihrer Zielsetzung in zwei Gruppen eingeteilt werden können. Die eine Gruppe betrifft Kriterien zur Verbesserung von Bauteileigenschaften, die zweite Gruppe betrifft Kriterien zur Reduzierung der Fertigstellungszeit. Bevorzugte Kriterien zur Verbesserung von Bauteileigenschaften sind:
- Position entlang einer Strömungsrichtung (Positionen stromabwärts einer aktuellen Bestrahlungsposition erhalten eine schlechtere Bewertung als Positionen stromaufwärts der Bestrahlungsposition),
- Auftreffwinkel des Strahls einer Bestrahlungsressource auf dem Baufeld der additiven Fertigungsvorrichtung in der Arbeitsebene (je weiter der Strahl von der Senkrechten abweicht, desto schlechter die Bewertung),
- Bestrahlungsrichtung, insbesondere der Winkel zwischen Scantrajektorie und dem Vektor vom Lotfußpunkt der Bestrahlungsressource hin zum jeweiligen Arbeitspunkt, bzw. die Unterscheidung, dass die Bestrahlung bevorzugt hin zur Bestrahlungsressource (schleppend) oder bevorzugt von ihr weg (stechend) durchgeführt wird. Die Bevorzugung einer dieser Bestrahlungsrichtungen wird abhängig vom Werkstoff, bzw. Prozess gewählt, da unterschiedliche Werkstoffe ein unterschiedliches Verhalten zeigen. Für eine additive Fertigungsmaschine mit einem Laser als Bestrahlungsressource und einem Stahlpulver als Aufbaumaterial wird beispielsweise eine schleppende Laserbelichtung bevorzugt, da eine geringere Rauchentwicklung beobachtet wurde. Bei anderen Materialien kann allerdings eine stechende Belichtung auch zu einer Reduzierung der Erzeugung von Materialauswurf ("Spratzern") und damit einer Verbesserung von Bauteileigenschaften führen. Bevorzugte Kriterien zur Reduzierung der Bauzeit sind:
   - Anzahl oder Bearbeitungsdauer der nachfolgenden Arbeitspakete (je größer Anzahl bzw. Bearbeitungsdauer desto besser die Bewertung) und
   - räumlicher Abstand zu dem Arbeitspaket, das die Bestrahlungsressource vorher bearbeitet hat (je kleiner der Abstand desto besser die Bewertung).

Bevorzugt werden Kriterien mit Auswirkung auf bestimmte Bauteileigenschaften höher priorisiert und können eine höhere Wichtung erfahren. Die Priorisierung innerhalb dieser Gruppe erfolgt bevorzugt spezifisch für unterschiedliche Materialien und Prozesse, so dass das Kriterium, welches den größten Einfluss auf eine bestimmte Bauteileigenschaft hat, am höchsten bewertet wird, also mit einem entsprechend hohen Wichtungsfaktor gewichtet wird und/oder in dem verschachtelten Vergleich zuerst geprüft wird. Beispielsweise reagieren einige Aufbaumaterialien besonders sensitiv auf den Strahl-Auftreffwinkel eines Lasers, während für andere Aufbaumaterialien eine Richtung der Bewegung des Laserspots auf dem Aufbaumaterial einen größeren Einfluss auf bestimmte Bauteileigenschaften hat.

Im Rahmen des Vergleichs (der Bewertung) können mehrere Kriterien verschachtelt geprüft werden. Beispielsweise kann zuerst die Anzahl der nachfolgenden Arbeitspakete, die das betrachtete Arbeitspaket voraussetzen, miteinander verglichen werden; wenn diese Anzahlen gleich sind, wird die Position entgegengesetzt zur Strömungsrichtung verglichen. Die Reihenfolge der Vergleiche definiert eine Priorisierung von wichtigen zu unwichtigeren Kriterien. Dies heißt, dass im Rahmen der Bewertung bevorzugt zunächst eine erste Gruppe von (insbesondere wichtigen) Bewertungskriterien des Bewertungsregelwerks verwendet wird und bei zwei oder mehr gleich bewerteten Arbeitspaketen mit der höchsten Bewertung diese Arbeitspakete mit einer weiteren Gruppe von (insbesondere nächstwichtigeren) Bewertungskriterien des Bewertungsregelwerks bewertet werden, so lange bis nur noch ein einziges am besten bewertetes Arbeitspaket oder kein Bewertungskriterium mehr übrig ist.

Bevorzugt werden unterschiedliche Bewertungen Bᵢ einzelner Kriterien durch einen Wert zu einer Bewertung B zusammengefasst B := B(B₀, B₁, ... B_{N}), wobei N die Anzahl der Kriterien ist. Dies ist insbesondere eine Linearkombination, z.B. B(B₀,..B_{N}) = sum(Wᵢ * Bᵢ), wobei Wᵢ Wichtungsfaktoren sind.

Beide Methoden lassen sich auch kombinieren, indem die numerische Bewertung in einem verschachtelten Vergleich genutzt wird. Ein Vorteil des Merkmals besteht darin, dass die Bauzeit oder die Bauteilqualität verbessert werden kann. Zudem kommt die bevorzugte Umsetzung ohne eine rechenintensive iterative Optimierung aus.
i) Zuordnung des ausgewählten Arbeitspakets zu einer Arbeitspaketgruppe, welche der aktuell ausgewählten Bestrahlungsressource zugeordnet ist und Entfernen dieses Arbeitspakets aus der Grundmenge der Arbeitspakete.

Das ausgewählte Arbeitspaket wird also einer Bestrahlungsressource zugeordnet. Da das ganze Verfahren im Vorfeld einer Bearbeitung erfolgen kann und nicht unbedingt an eine konkrete Maschine gekoppelt ist (Alleine die Anzahl und Positionierung der Bestrahlungsressourcen relativ zueinander und relativ zum Baufeld sollten jeweils identisch sein), ist es dabei nur notwendig, das ausgewählte Arbeitspaket einer Arbeitspaketgruppe zuzuordnen, welche wiederum der ausgewählten Bestrahlungsressource zugeordnet ist. Man erhält also einen Datensatz von Arbeitspaketgruppen, welche Arbeitsdaten für die jeweiligen Bestrahlungsressourcen einer Vorrichtung zur additiven Fertigung einer Anzahl von Bauteilen enthalten.

Damit Arbeitspakete nicht doppelt vergeben werden, werden die jeweils zugeordneten Arbeitspakete aus der Grundmenge gelöscht. Dadurch ergeben sich bei einer erneuten Durchführung des Verfahrens mit der modifizierten Grundmenge in der Regel auch jeweils unterschiedliche Bearbeitungsreihenfolgen der Arbeitspakete für jeden Durchlauf.
j) Wiederholung zumindest der Schritte d) bis i) bis zu einem vorbestimmten Abbruchkriterium.

Ein bevorzugtes Abbruchkriterium ist dabei die Anzahl der vergebenen oder verbliebenen Arbeitspakete, wobei eine bevorzugte Abbruchbedingung eine Verteilung aller Arbeitspakete vorsieht. Es können dabei auch weitere der angegebenen oder zusätzliche Schritte in die Wiederholung aufgenommen werden, wobei es bevorzugt ist, keine Schritte mehrfach durchzuführen, deren Resultat sich nicht ändert.

Ein erfindungsgemäßer Bestrahlungssteuerdatensatz ist mittels eines erfindungsgemäßen Verfahrens erzeugt worden. Er enthält bevorzugt Arbeitspaketgruppen mit Arbeitspaketen für die einzelnen Bestrahlungsressourcen. Der Bestrahlungssteuerdatensatz kann dabei bereits konkrete Bestrahlungsparameter umfassen oder auch nur abstrakte Arbeitspakete, aus denen Bestrahlungsparameter abgeleitet werden können.

Ein erfindungsgemäßes Verfahren zur additiven Fertigung zumindest einer Bauteilschicht zumindest eines Bauteils, umfasst die Schritte:
- Einbringen einer Schicht eines Aufbaumaterials in einen Prozessraum;
- Selektives Verfestigen des Aufbaumaterials der Schicht durch Bestrahlung von zumindest einem Teilbereich der Schicht mittels einer Mehrzahl von Bestrahlungsressourcen,
- Steuerung der Bestrahlungsressourcen mittels Steuerdaten, welche unter Verwendung eines erfindungsgemäßen Bestrahlungssteuerdatensatzes erzeugt wurden.

Eine erfindungsgemäße Steuerdatenerzeugungsvorrichtung zur Generierung eines Bestrahlungssteuerdatensatzes zur Erstellung von Steuerdaten für eine Vorrichtung zur additiven Fertigung zumindest einer Anzahl von Bauteilen in einem Fertigungsprozess, in welchem wenigstens eine Schicht eines Aufbaumaterials in einen Prozessraum eingebracht wird und das Aufbaumaterial der Schicht durch Bestrahlung von zumindest einem Teilbereich der Schicht unter Verwendung einer Mehrzahl von Bestrahlungsressourcen selektiv zu Bauteilschichten verfestigt wird,
umfassend eine Zuordnungseinheit ausgelegt zur:
a) Verarbeitung von bereitgestellten Schichtdaten umfassend Daten zum Aufbau von Schichtsegmenten für eine Bauteilschicht,
b) Aufteilung der Schichtdaten auf mehrere Arbeitspakete unter Bildung einer Grundmenge der Arbeitspakete,
c) Bereitstellung einer fest definierten Reihenfolgerelation für die Arbeitspakete,
d) Festlegung einer Bearbeitungsreihenfolge der Arbeitspakete basierend zumindest auf der Reihenfolgerelation,
e) Ermittlung einer Erledigungszeit für jede der Bestrahlungsressourcen für jeweils diejenige Arbeitspaketgruppe der Arbeitspakete, die diesen Bestrahlungsressourcen bereits vorher zugeordnet worden sind,
f) Auswahl einer Bestrahlungsressource unter Berücksichtigung der für sie ermittelten Erledigungszeit, vorzugsweise derjenigen Bestrahlungsressource mit der jeweils kürzesten ermittelten Erledigungszeit,
g) Ermittlung einer Auswahlmenge von Arbeitspaketen aus der Grundmenge der Arbeitspakete, basierend auf der Reihenfolgerelation, wobei die Auswahlmenge diejenigen Arbeitspakete umfasst, welche gemäß der Bearbeitungsreihenfolge bearbeitet werden können,
h) Auswahl eines Arbeitspakets aus der Auswahlmenge unter Berücksichtigung eines vorgegebenen Bewertungsregelwerks,
i) Zuordnung des ausgewählten Arbeitspakets zu einer Arbeitspaketgruppe, welche der aktuell ausgewählten Bestrahlungsressource zugeordnet ist und Entfernen dieses Arbeitspakets aus der Grundmenge der Arbeitspakete,
j) Wiederholung zumindest der Schritte d) bis i) bis zu einem vorbestimmten Abbruchkriterium.

Eine erfindungsgemäße Vorrichtung zur additiven Fertigung zumindest einer Bauteilschicht zumindest eines Bauteils in einem additiven Fertigungsprozess umfasst zumindest einer Zuführvorrichtung zum Einbringen einer Schicht eines Aufbaumaterials in einen Prozessraum, einer Mehrzahl von Bestrahlungsressourcen zum selektiven Verfestigen des Aufbaumaterials der Schicht durch Bestrahlung von zumindest einem Teilbereich der Schicht sowie einer erfindungsgemäßen Steuerdatenerzeugungsvorrichtung.

Erfindungsgemäße Steuerdaten zur Steuerung einer Vorrichtung zur additiven Fertigung sind so ausgebildet, dass sie unter Verwendung eines erfindungsgemäßen Bestrahlungssteuerdatensatzes erzeugt wurden.

Die Erfindung kann in Form einer Rechnereinheit mit geeigneter Software realisiert sein. Dies gilt insbesondere für die Steuerdatenerzeugungsvorrichtung, die in Form von geeigneten Softwareprogrammteilen in der Rechnereinheit realisiert sein kann. Die Rechnereinheit kann z. B. hierzu einen oder mehrere zusammenarbeitende Mikroprozessoren oder dergleichen aufweisen. Eine weitgehend softwaremäßige Realisierung hat den Vorteil, dass auch schon bisher verwendete Steuereinrichtungen auf einfache Weise durch ein Software- bzw. Firmware-Update nachgerüstet werden können, um auf die erfindungsgemäße Weise zu arbeiten.

Insofern wird die Aufgabe auch durch ein entsprechendes Computerprogrammprodukt mit einem Computerprogramm gelöst, welches direkt in eine Speichereinrichtung einer Recheneinrichtung (in einer Steuerdatenerzeugungsvorrichtung und/oder einer Steuereinrichtung einer Vorrichtung zur additiven Fertigung einer Bauteilschicht eines Bauteils) ladbar ist, mit Programmabschnitten, um alle Schritte des erfindungsgemäßen Verfahrens auszuführen, wenn das Programm in der Recheneinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten, auch Hardware-Komponenten, wie z. B. Hardware-Schlüssel (Dongles etc.) zur Nutzung der Software, umfassen. Zum Transport zur Steuereinrichtung und/oder zur Speicherung an oder in der Steuereinrichtung bzw. Kontrolleinrichtung kann ein computerlesbares Medium, beispielsweise ein Memorystick, eine Festplatte oder ein sonstiger transportabler oder fest eingebauter Datenträger dienen, auf welchem die von einer Rechnereinheit der Steuereinrichtung bzw. Kontrolleinrichtung einlesbaren und ausführbaren Programmabschnitte des Computerprogramms gespeichert sind.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten im Rahmen des Schutzbereichs der Ansprüche kombiniert werden können.

Gemäß einem bevorzugten Verfahren umfassen die Arbeitspakete zusätzlich definierte Bestrahlungsparameter, welche Angaben zur Führung bzw. Art der Bestrahlung sein können aber auch explizite Zuordnungen zu Bestrahlungsressourcen. Das bevorzugte Verfahren umfasst dabei zusätzlich die folgenden Schritte:
- Bereitstellung einer Zuordnungsrelation zur Zuordnung von Bestrahlungsparametern zu Bestrahlungsressourcen.

Diese Zuordnungsrelation umfasst bevorzugt Entscheidungskriterien, ob eine Bestrahlungsressource die Anforderungen für die Bestrahlungsparameter erfüllt, also z.B. ob die erforderliche Art der Strahlung, Energie, Frequenz oder Intensität bereitgestellt werden kann. Die Zuordnungsrelation kann aber auch in einem einfachen Fall nur prüfen, ob die jeweilige Bestrahlungsressource in den Bestrahlungsparametern explizit angegeben ist oder ob sie ausgeschlossen wurde.
- Filterung der Auswahlmenge der Arbeitspakete basierend auf der Zuordnungsrelation und der Bestrahlungsparameter in Abhängigkeit von der ausgewählten Bestrahlungsressource.

In diesem Schritt wird entschieden, ob die Arbeitspakete überhaupt der ausgewählten Bestrahlungsressource gemäß der Zuordnungsrelation und den Bestrahlungsparametern zugeordnet werden kann oder darf. Wenn nicht, wird das betreffende Arbeitspaket aus der Auswahlmenge gelöscht oder gar nicht erst in die Auswahlmenge aufgenommen. Bevorzugt erfolgt zumindest der zweite dieser Schritte nach Anwendung der Reihenfolgerelation. In einer anderen bevorzugten Ausführungsform erfolgt eine Anwendung davor. Die Schritte können aber auch Teil des Schritts i) sein, also in Form der Bewertung berücksichtigt werden. Ein Vorteil dieser Weiterbildung des erfindungsgemäßen Verfahrens ist eine Verbesserung von Bauteileigenschaften; es kann zwischen unterschiedlichen Bestrahlungsressourcen unterschieden werden, die z.B. ein unterschiedliches Leistungsspektrum, einen unterschiedlichen Strahldurchmesser, oder eine unterschiedliche Intensitätsverteilung aufweisen können.

Gemäß einem bevorzugten Verfahren umfasst das Bewertungsregelwerk eine Bewertung für mindestens ein Kriterium der Gruppe
- räumlicher Abstand des Arbeitspakets zur ausgewählten Bestrahlungsressource (z.B. über Ermittlung des Lotfußpunkts des Austrittsorts eines Laserstrahls aus der Optik, wobei der Lotfußpunkt in der Arbeitsebene bzw. auf dem Baufeld liegt),
- Anzahl der von der Erledigung des Arbeitspakets abhängigen Arbeitspakete,
- Lage des Arbeitspakets relativ zu einer räumlichen Ausdehnung eines ermittelten oder vordefinierten Rauchabzugbereichs,
- räumlicher Abstand des Arbeitspakets zu einem vorher zugeordneten Arbeitspaket,
- Dauer der Arbeitspakete, die das betreffende Arbeitspaket voraussetzen,
- räumlicher Abstand von Strahlen der Bestrahlungsressourcen zueinander.

Dabei wird bevorzugt (basierend auf diesem Bewertungsregelwerk) jeweils ein Bewertungswert berechnet, wobei das Bewertungsregelwerk dermaßen gestaltet ist, dass es dem mindestens einen Kriterium einen numerischen Wert zuordnet. Besonders bevorzugt werden unterschiedliche Kriterien zusätzlich unterschiedliche Wichtungen zugeordnet, bzw. das Bewertungsregelwerk wichtet Kriterien unterschiedlich numerisch.

Es wird also z.B. einem Arbeitspaket, dessen Ausführung zu dem betreffenden Zeitpunkt (in der kürzesten Erledigungszeit) außerhalb einer zu erwartenden Rauchfahne liegt, die bei der Durchführung eines anderen Arbeitspakets durch eine andere Strahlungsressource entsteht, eine bessere Bewertung (z.B. ein höherer Bewertungswert) zugeordnet, als Arbeitspaketen, deren Ausführung in dieser Rauchfahne liegt.

Ein Vorteil einer Berücksichtigung des räumlichen Abstands des Arbeitspakets zur ausgewählten Bestrahlungsressource ist, dass beispielsweise eine Reduzierung der Rauchentwicklung und eine Verbesserung von Bauteileigenschaften bewirken kann.

Ein Vorteil einer Berücksichtigung der Lage eines Arbeitspakets relativ zur Ausdehnung/Lage eines Rauchabzugbereichs ist, dass eine Bestrahlung eines durch Rauch abgeschatteten Bereichs vermieden werden kann, was zu einer Verbesserung von Bauteileigenschaften führen kann (z. B. geringere Porosität und/oder verbesserte mechanische Eigenschaften des Bauteils).

Ein Vorteil einer Berücksichtigung des räumlichen Abstands des Arbeitspakets zu einem vorher zugeordneten Arbeitspaket ist, dass eine Reduzierung der Bauzeit durch Reduzierung von Sprungdistanzen einer Bestrahlungsressource zwischen den Bereichen verschiedener Arbeitspakete und damit eine Verringerung unproduktiver Fertigstellungszeit bewirken kann. Zusätzlich kann eine Verbesserung von Bauteileigenschaften bewirkt werden, indem eine Verfestigung im Anschluss an einen noch warmen, zuvor verfestigten Bereich fortgesetzt wird.

Ein Vorteil einer Berücksichtigung der Anzahl der Arbeitspakete, die das betreffende Arbeitspaket voraussetzen ist, dass dies zu einer Reduzierung der Fertigstellungszeit führen kann.

Der letzte Punkt der Kriterien ist besonders bei der Verwendung von Elektronenstrahlen von Bedeutung. Diese dürfen nicht zu nahe zueinander sein, da sich ihre elektrischen Felder gegenseitig negativ beeinflussen können. Aber auch bei der Verwendung von Lichtstrahlen können lokale Temperaturverteilungen auftreten, die negativ aufeinander wirken können.

Gemäß einem bevorzugten Verfahren wird geprüft, ob das ausgewählte Arbeitspaket auch von einer anderen Bestrahlungsressource bestrahlt werden kann und ob diese andere Bestrahlungsressource hinsichtlich eines vorbestimmten Kriteriums, insbesondere hinsichtlich eines Auftreffwinkels (auf dem Baufeld) oder Auslenkungswinkels eines Strahls der Bestrahlungsressource und/oder Abstands zum Arbeitspaket, besser zur Erledigung des Arbeitspakets geeignet ist. Dies kann einfach anhand der Position entschieden werden, an der das Arbeitspaket durchgeführt werden soll. In dem Falle, dass die andere Bestrahlungsressource besser geeignet ist, wird die andere Bestrahlungsressource zur ausgewählten Bestrahlungsressource erklärt und es erfolgt eine Zuordnung des ausgewählten Arbeitspakets zu einer Arbeitspaketgruppe, welche dieser (neuen) aktuell ausgewählten Bestrahlungsressource zugeordnet ist.

Im Rahmen dieser bevorzugten Ausführungsform werden bevorzugt zusätzlich die Erledigungszeiten der betreffenden Bestrahlungsressourcen ohne das betreffende Arbeitspaket miteinander verglichen. Ein Wechsel der ausgewählten Bestrahlungsressource erfolgt dabei nur in dem Fall, wenn sich die betreffenden Erledigungszeiten maximal um eine vorgegebene Zeitspanne unterscheiden. Der Wechsel zwischen den Bestrahlungsressourcen erfolgt also nur, wenn der Unterschied der Erledigungszeiten Δt (= t_{Erledigung}(X) - t_{Erledigung}(Y)) beider Bestrahlungsressourcen kleiner als ein festgelegter Wert t_{Toleranz} ist. Das bedeutet, dass sich die Fertigstellungszeit durch diese eine Zuweisung im schlechtesten Fall um Δt, verlängern kann. Die Zuordnung muss sich aber nicht zwingend auf diese Zeitdifferenz auswirken, da der Wechsel zu einer Zeitersparnis führen kann. Anstelle von t_{Toleranz} könnte aber auch für die vorgegebene Zeitspanne ein Budget für die gesamte Schicht verwendet und die Fertigstellungszeit mit und ohne Wechsel simuliert werden. Dieses könnte man wiederum von einer schichtspezifischen Mindestschichtzeit abhängig machen, die notwendig ist, um eine festgelegte Substrattemperatur (z. B. die Temperatur der Oberfläche des Aufbaumaterials) nicht zu überschreiten. Diese Mindestschichtzeit kann durch eine thermische Simulation berechnet werden, oder durch eine Temperaturmessung des Baufeldes ermittelt werden. Ein Vorteil dieser Weiterbildung des erfindungsgemäßen Verfahrens ist eine Verbesserung von Bauteileigenschaften durch einen lokal günstigeren Auftreffwinkel des Strahls auf dem Aufbaumaterial oder eine für bestimmte Bauteileigenschaften vorteilhafteren Bestrahlungsrichtung.

Gemäß einem bevorzugten Verfahren umfasst das Bewertungsregelwerk eine Kostenfunktion und die Bewertung, insbesondere Bewertungswerte, der Arbeitspakete werden im Zuge einer Optimierung dieser Kostenfunktion ermittelt. Diese Kostenfunktion umfasst bevorzugt
- eine Fertigstellungszeit und/oder
- die Erledigungszeiten und/oder
- Kriterien und/oder eine Relevanzzuordnung gemäß dem oben genannten Bewertungsregelwerk und/oder
- ein vorbestimmtes Kriterium gemäß der vorangehend beschriebenen Auswahl einer anderen Bestrahlungsressource.

Dabei erfolgt die Bewertung (insbesondere eine Ermittlung der Bewertungswerte) bevorzugt mittels einer iterativen Optimierung eines Ablaufplans, insbesondere mittels einer Optimierung der Fertigstellungszeit.

Bei einer Bewertung der jeweils aktuell ausgewählten Arbeitspakete nach dem Bewertungsregelwerk wie oben beschrieben, wird jeweils eine Entscheidung getroffen, die sich auf die Entscheidungsmöglichkeiten in den nachfolgenden Zuweisungen auswirken kann. Wie gut diese Entscheidung war, kann aber im Grunde erst abgeschätzt werden, wenn die gesamte Schicht berechnet wurde. Ein bevorzugter Optimierungsalgorithmus berechnet für jede Iteration einen Satz an Bewertungen und daraus resultierenden Entscheidungen und damit die Zuordnung zu den Arbeitspaketgruppen (den Bestrahlungseinheiten) und die zeitliche Abfolge für die ganze Schicht. Das Ergebnis wird dann mit einer Kostenfunktion bewertet. Für die erste Iteration können diese Entscheidungen im Grunde beliebig getroffen werden, bevorzugt jedoch basierend auf dem Bewertungsregelwerk. Um weitere Lösungen und damit Sätze von Entscheidungen zu generieren, sind unterschiedliche Algorithmen bekannt, zum Beispiel genetische Algorithmen, die die Entscheidung aus vorherigen Iterationen miteinander kombinieren. Man spricht dabei auch von einer kombinatorischen Optimierung. Ein Vorteil dieser Weiterbildung des erfindungsgemäßen Verfahrens ist, dass mittels der Kostenfunktion ein optimierter Ablaufplan ermittelt werden kann, wodurch Bauzeit und Bauteileigenschaften verbessert werden können, allerdings unter Hinnahme einer dafür erforderlichen Rechenzeit.

Gemäß einem bevorzugten Verfahren erfolgt die Festlegung der Bearbeitungsreihenfolge der Arbeitspakete (s. Schritt d) oben) zusätzlich gemäß einer Benutzervorgabe. Dabei werden bevorzugt nur Benutzervorgaben berücksichtigt (bzw. nur solche Benutzervorgaben sind zulässig), welche der Reihenfolgerelation genügen. Dabei umfasst die Benutzervorgabe bevorzugt eine Vorgabe für eine Vorschubrichtung und/oder eine Vorgabe für eine Zuordnung einer Bestrahlungsressource zu einem (konkreten) Bauteil. Also wird das betreffende Bauteil komplett oder definierte Teile des Bauteils im Wesentlichen von der betreffenden Bestrahlungsressource gefertigt. Ein Vorteil dieser Weiterbildung des erfindungsgemäßen Verfahrens ist eine Verbesserung von Bauteileigenschaften in bestimmten Bereichen, indem kein Wechsel der Bestrahlungsressource erfolgt, sofern diese durch den Benutzer zugeordnet wurde, sowie die Möglichkeit, dass spezielle Anforderungen bzw. Vorgaben eines Bedieners berücksichtigt werden können.

Ein bevorzugtes Verfahren umfasst die Schritte:
- Ermittlung, ob Arbeitspakete der Auswahlmenge und bereits der aktuell ausgewählten Bestrahlungsressource zugeordnete Arbeitspakete eine Zugehörigkeit zu demselben Bauteil aufweisen, und falls dies der Fall ist,
- Erstellung einer neuen Auswahlmenge umfassend die ermittelten Arbeitspakete der Auswahlmenge, welche die betreffende Zugehörigkeit aufweisen.

Es wird also untersucht, ob bereits ausgewählte Arbeitspakete zu Bearbeitung desselben Bauteils dienen, wie (bereits einsortierte) Arbeitspakete der Arbeitspaketgruppe der aktuell ausgewählten Bestrahlungsressource. Diese Arbeitspakete werden dann zur aktuellen Auswahlmenge zugeordnet bzw. der Rest der Arbeitspakete wird aus der ursprünglichen Auswahlmenge gelöscht. Diese Schritte können auch im Zusammenhang mit der Bewertung abgearbeitet werden bzw. Teil des Bewertungsregelwerks sein. Es ist aber bevorzugt, auf diese Weise die Auswahlmenge vor der Bewertung zu filtern. Ein Vorteil dieser Weiterbildung des erfindungsgemäßen Verfahrens ist eine geringe Zahl bzw. sind geringere Strecken von Sprüngen zwischen den Bereichen von Arbeitspaketen, damit geht eine Verringerung der Fertigstellungszeit einher. Zusätzlich besteht nun auch eine Möglichkeit der Fortsetzung der Bestrahlung an einer noch warmen Stelle und dadurch eine potenzielle Verbesserung von Bauteileigenschaften.

Gemäß einem bevorzugten Verfahren werden zur Festlegung der Bearbeitungsreihenfolge die Arbeitspakete basierend auf der Reihenfolgerelation in einem einfach gerichteten Graphen eingeordnet werden. In diesem Graphen liegen die Arbeitspakete als Knoten vor und deren Relation (Arbeitsablauf) zueinander in Form gerichteter Kanten gemäß der Reihenfolgerelation. Bei der Ermittlung der Auswahlmenge von Arbeitspaketen aus der Grundmenge der Arbeitspakete werden bevorzugt nur diejenigen Arbeitspakete verwendet, zu deren Bearbeitung kein Arbeitspaket des Graphen vorher abgearbeitet werden muss. In Bezug zum Graphen bedeutet dies, dass kein Arbeitspaket in die Auswahlmenge aufgenommen wird, zu dem eine Kante führt. Es werden also stets Startknoten, bzw. keine Nachfolger ausgewählt. Es ist dabei bevorzugt, dass die Grundmenge der Arbeitspakete der gerichtete Graph ist oder diesen umfasst. Der Graph stellt dabei immer den Zustand zum Zeitpunkt der Zuordnung dar. Es ist bevorzugt, dass ermittelt wird, ob sich zu einem Zeitpunkt der Fertigung, welcher der kürzesten Erledigungszeit entspricht, Arbeitspakete in der Durchführung befinden und noch nicht abgearbeitet sind. Nachfolger dieser Arbeitspakete werden bevorzugt noch nicht in die Auswahlmenge aufgenommen. Ein Vorteil dieser Weiterbildung des erfindungsgemäßen Verfahrens ist, dass die Reihenfolgerelation berücksichtigt werden kann, was eine Verbesserung von Bauteileigenschaften bewirken kann.

Gemäß einem bevorzugten Verfahren wird in dem Fall, dass für die ausgewählte Bestrahlungsressource keine Arbeitspakete gefunden werden können, aber noch nicht bearbeitete Arbeitspakete vorhanden sind, der ausgewählten Bestrahlungsressource eine vorbestimmte Wartezeit an Stelle eines Arbeitspakets zugeordnet. Es wird dann kein Arbeitspaket aus der Grundmenge gelöscht und zumindest die wiederholten Schritte des Verfahrens erneut durchgeführt. Die Wartedauer ist bevorzugt im Sinne eines Zeitwerts vorbestimmt oder wird basierend auf Kriterien (z.B. Abarbeitung durch die anderen Bestrahlungsressourcen) dynamisch berechnet. Es ist dabei bevorzugt, dass die Dauer der Wartezeit so bemessen ist, dass in dieser Zeit mindestens ein weiteres Arbeitspaket von einer anderen Bestrahlungsressource abgeschlossen wird. Ein Vorteil dieser Weiterbildung des erfindungsgemäßen Verfahrens ist, dass die Reihenfolgerelation eingehalten wird.

Ein bevorzugter einfacher Aufbau einer Bearbeitungsreihenfolge, insbesondere eines gerichteten Graphen, kann anhand der reinen Zugehörigkeit zu bestimmten Bereichen erfolgen. Als Eingabe dient eine Liste, in der Schichtsegmente in der gewünschten Reihenfolge enthalten sind, von der alle Schichtsegmente beginnend mit dem zweiten Eintrag in der Liste betrachtet werden. Für jedes Arbeitspaket, das zum vorherigen Schichtsegment gehört (daher wird mit dem zweiten Schichtsegment gestartet), wird in der Bearbeitungsreihenfolge eine Abhängigkeit zu allen Arbeitspaketen hinzugefügt, die zu dem momentan betrachteten Schichtsegment gehören.

Ein bevorzugter weiterer Aufbau einer Bearbeitungsreihenfolge, insbesondere eines gerichteten Graphen, bei dem die Beziehungen auf topologisch zusammenhängende Bereiche beschränkt werden, kann wie folgt erreicht werden. Der Vorteil einer solchen Bearbeitungsreihenfolge ist, dass die Anzahl der Abhängigkeiten zwischen den Arbeitspaketen reduziert werden, so dass es mehr Möglichkeiten gibt, die Arbeitspakete auf die Bestrahlungsressourcen aufzuteilen. Ähnlich wie im vorangehenden einfachen Aufbau werden einzelne Schichtsegmente aus einer Liste betrachtet, in der Schichtsegmente in der gewünschten Reihenfolge enthalten sind und alle Schichtsegmente in einer Schleife beginnend mit dem zweiten Eintrag in der Liste durchlaufen werden. Für jedes erste Arbeitspaket, das zu dem betrachteten Segment gehört, werden Arbeitspakete aus dem vorherigen Segment ermittelt, die benachbart an dem ersten Arbeitspaket anliegen. Für alle benachbarten Arbeitspakete wird in der Bearbeitungsreihenfolge eine Abhängigkeit zu dem ersten Arbeitspaket hinzugefügt. Es wird dabei insbesondere eine Liste mit anliegenden Vorläufern von Arbeitspaketen verwendet.

Bei der Bestrahlungsreihenfolge kann es weitere Präferenzen geben, die möglicherweise im Widerspruch zu der schon vorgegebenen relativen Reihenfolge zwischen den Arbeitspaketen steht. Z. B. kann zur Vermeidung von Laser-/Rauchinteraktionen gefordert werden, dass die Arbeitspakete entgegengesetzt zur Strömungsrichtung bestrahlt werden. Die folgenden Merkmale könnten Teil des Bewertungsregelwerkes sein, sie könnten jedoch auch zur Bildung der Bearbeitungsreihenfolge dienen.

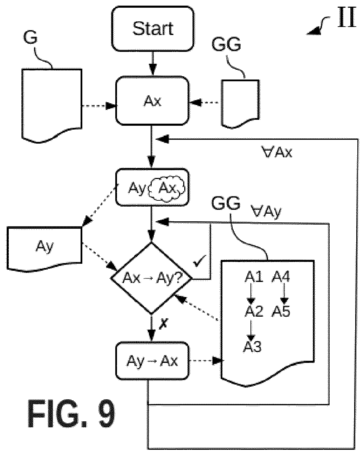

Figur 9 zeigt ein Flussdiagramm eines Ausführungsbeispiels zur Erstellung einer weiteren Bearbeitungsreihenfolge, eines weiteren gerichteten Graphen GG. Dieses Flussdiagramm beschreibt einen Algorithmus, der Abhängigkeiten für Arbeitspakete in einem potentiell durch Rauch abgeschatteten Bereich hinzufügt, wenn hierdurch kein Widerspruch entsteht. Als Eingabe dient eine Grundmenge mit allen Arbeitspaketen und die Bearbeitungsreihenfolge (z.B. der gerichtete Graph), die schon alle zwingend erforderlichen Abhängigkeiten, z.B. aufgrund der Bestrahlungsreihenfolge der Schichtsegmente, enthält. Für jedes erste Arbeitspaket werden alle Arbeitspakete ermittelt, die während der Bestrahlung des ersten Arbeitspakets potentiell von Rauch beschattet werden.

Es werden dann alle von Rauch beschatteten Arbeitspakete durchlaufen, und für jedes Arbeitspaket geprüft, ob eine vorherige Bestrahlung des ersten Arbeitspakets erforderlich ist. Nur wenn dies nicht der Fall ist, wird zu der Bearbeitungsreihenfolge (z.B. dem Graph) eine Abhängigkeit des ersten Arbeitspakets von den betreffenden Arbeitspaketen hinzugefügt.

Vorteil der Erfindung ist eine besonders hohe Produktivität (kurze Bauzeit) durch eine gleichmäßigere Auslastung aller Bestrahlungsressourcen, eine zugleich feste Einhaltung einer vorgegebenen relativen Bestrahlungsreihenfolge zwischen den Schichtsegmenten (Kontur, DownSkin, UpSkin, Infill, etc) und eine daraus resultierende verbesserte Bauteilqualität (z. B. in Bezug auf die mechanischen Eigenschaften des Bauteils, etwa seine Bruch- oder Zugfestigkeit, aber auch in Bezug auf seine Oberflächenbeschaffenheit), was insbesondere durch die bevorzugte Minimierung von Wechseln der Bestrahlungsressourcen, insbesondere an der Bauteiloberfläche, noch verbessert wird. Zudem erfolgt bei einer bevorzugten Ausführungsform eine Zuordnung der am besten geeigneten Bestrahlungsressource (z.B. der Laser mit dem günstigsten Auftreffwinkel auf das Aufbaumaterial), eine Einhaltung einer bevorzugten Bestrahlungsrichtung relativ zur Position des Scanners, eine Einhaltung einer bevorzugten Bestrahlungsrichtung relativ zur laminaren Strömung und eine Vermeidung von Rauch-Laser-Interaktionen.

Die Erfindung wird im Folgenden unter Hinweis auf die beigefügten Figuren anhand von Ausführungsbeispielen noch einmal näher erläutert. Es wird nochmals darauf hingewiesen, dass in der nachfolgenden Figurenbeschreibung der Einfachheit halber ein erfindungsgemäßes Herstellungsverfahren zumindest einer Bauteilschicht in einem Fertigungsprozess beschrieben wird, wobei die Vorrichtung zur additiven Fertigung durch Steuerdaten angesteuert wird, die gemäß einem erfindungsgemäßen Verfahren zur Generierung von Steuerdaten erzeugt wurden. Weiterhin wird von nur einer einzigen herzustellenden Bauteilschicht bzw. einem einzelnen Bauteil ausgegangen, ohne die Erfindung darauf zu beschränken. Dabei sind in den verschiedenen Figuren gleiche Komponenten mit identischen Bezugsziffern versehen. Die Figuren sind in der Regel nicht maßstäblich.

Es zeigen:
Figur 1 eine schematische, teilweise im Schnitt dargestellte Ansicht eines Ausführungsbeispiels einer erfindungsgemäßen Vorrichtung zur additiven Fertigung von Fertigungsprodukten,
Figur 2 eine schematische Darstellung einer Zuweisung von Schichtbereichen einer Schicht zu verschiedenen Bestrahlungsressourcen gemäß einem Ausführungsbeispiel des erfindungsgemäßen Verfahrens,
Figur 3 eine schematische Darstellung einer Zuweisung von Schichtbereichen einer Schicht zu verschiedenen Bestrahlungsressourcen gemäß einem weiteren Ausführungsbeispiel des erfindungsgemäßen Verfahrens,
Figur 4 eine schematische Darstellung einer Bauteilschicht zur Verdeutlichung des Aufbaus eines gerichteten Graphen,
Figur 5 ein Flussdiagramm eines Ausführungsbeispiels eines erfindungsgemäßen Verfahrens zur Generierung eines Bestrahlungssteuerdatensatzes,
Figur 6 ein Flussdiagramm mit einer genaueren Darstellung eines Ausführungsbeispiels eines erfindungsgemäßen Verfahrens zur Generierung eines Bestrahlungssteuerdatensatzes,
Figur 7 ein Flussdiagramm eines Ausführungsbeispiels zur Erstellung eines gerichteten Graphen,
Figur 8 ein Flussdiagramm eines Ausführungsbeispiels zur Erstellung eines weiteren gerichteten Graphen,
Figur 9 ein Flussdiagramm eines Ausführungsbeispiels zur Erstellung eines weiteren gerichteten Graphen.

Die nachfolgenden Ausführungsbeispiele werden mit Bezug auf eine Vorrichtung 1 zur additiven Fertigung von Fertigungsprodukten in Form einer Lasersinter- oder Laserschmelzvorrichtung 1 beschrieben, wobei explizit noch einmal darauf hingewiesen ist, dass die Erfindung nicht auf Lasersinter- oder Laserschmelzvorrichtungen beschränkt ist.

Die Vorrichtung wird im Folgenden - ohne eine Beschränkung der Allgemeinheit - daher kurz als "Lasersintervorrichtung" 1 bezeichnet und der Begriff "Belichtung" wird synonym zum Begriff "Bestrahlung" genutzt.

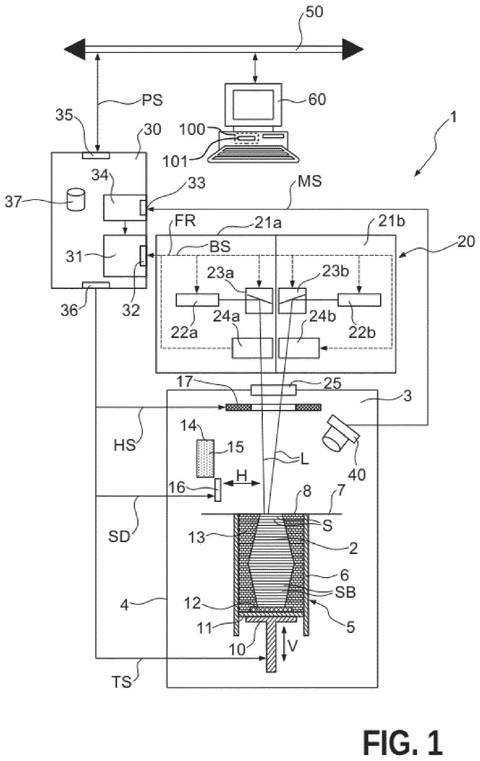

Eine solche Lasersintervorrichtung 1 ist schematisch in Figur 1 gezeigt. Die Vorrichtung weist eine Prozesskammer 3 bzw. einen Prozessraum 3 mit einer Kammerwandung 4 auf, in der im Wesentlichen der Fertigungsprozess abläuft. In der Prozesskammer 3 befindet sich ein nach oben offener Behälter 5 mit einer Behälterwandung 6. Die obere Öffnung des Behälters 5 bildet die jeweils aktuelle Arbeitsebene 7. Der innerhalb der Öffnung des Behälters 5 liegende Bereich dieser Arbeitsebene 7 kann zum Aufbau des Objekts 2 verwendet werden und wird daher als Baufeld 8 bezeichnet.

Der Behälter 5 weist eine in einer vertikalen Richtung V bewegliche Grundplatte 11 auf, die auf einem Träger 10 angeordnet ist. Diese Grundplatte 11 schließt den Behälter 5 nach unten ab und bildet damit dessen Boden. Die Grundplatte 11 kann integral mit dem Träger gebildet sein, sie kann aber auch eine getrennt von dem Träger 10 gebildete Platte sein und an dem Träger 10 befestigt oder auf diesem einfach gelagert sein. Je nach Art des konkreten Aufbaumaterials, also beispielsweise des verwendeten Pulvers, und des Fertigungsprozesses kann auf der Grundplatte 11 eine Bauplattform 12 als Bauunterlage angebracht sein, auf der das Objekt 2 aufgebaut wird. Grundsätzlich kann das Objekt aber auch auf der Grundplatte 11 selber aufgebaut werden, die dann die Bauunterlage bildet.

Der grundsätzliche Aufbau des Objekts 2 erfolgt so, indem eine Schicht Aufbaumaterial 13 zunächst auf die Bauplattform 12 aufgebracht wird, dann mit einem Laser an den Punkten, welche Teile des zu fertigenden Objekts 2 bilden sollen, das Aufbaumaterial selektiv verfestigt wird, dann mit Hilfe des Trägers 10 die Grundplatte 11, somit die Bauplattform, abgesenkt wird und eine neue Schicht des Aufbaumaterials 13 aufgetragen und dann selektiv verfestigt wird usw. Die im Baufeld 8 befindliche Arbeitsebene 7 entspricht dann jeweils der aktuellen Schicht.

In Figur 1 ist das in dem Behälter 5 auf der Bauplattform 12 aufgebaute Objekt 2 unterhalb der Arbeitsebene in einem Zwischenzustand dargestellt. Es weist bereits mehrere verfestigte Schichten S auf, umgeben von unverfestigt gebliebenem Aufbaumaterial 13. Als Aufbaumaterial können verschiedene Materialien verwendet werden, vorzugsweise Pulver, insbesondere Metallpulver, Kunststoffpulver, Keramikpulver, Sand, gefüllte oder gemischte Pulver oder auch pastöse Materialien.

Frisches Aufbaumaterial 15 befindet sich in einem Vorratsbehälter 14 der Lasersintervorrichtung 1. Mit Hilfe eines in einer horizontalen Richtung H bewegbaren Beschichters 16 kann das Aufbaumaterial in der Arbeitsebene 7 bzw. innerhalb des Baufelds 8 in Form einer dünnen Schicht aufgebracht werden.

Optional befindet sich in der Prozesskammer 3 eine zusätzliche Strahlungsheizung 17. Diese kann zum Beheizen des aufgebrachten Aufbaumaterials 13 dienen, so dass die für die selektive Verfestigung genutzte Bestrahlungseinrichtung nicht zu viel Energie einbringen muss. Das heißt, es kann beispielsweise mit Hilfe der Strahlungsheizung 17 schon eine Menge an Grundenergie in das Aufbaumaterial 13 eingebracht werden, welche natürlich noch unterhalb der notwendigen Energie ist, bei der das Aufbaumaterial 13 verschmilzt bzw. sintert. Als Strahlungsheizung 17 kann beispielsweise ein Infrarotstrahler genutzt werden.

Zum selektiven Verfestigen weist die Lasersintervorrichtung 1 eine Bestrahlungsvorrichtung 20 bzw. konkret Belichtungsvorrichtung 20 auf, die mehrere Bestrahlungsressourcen 21a, 21b umfasst.

In Figur 1 sind schematisch nur zwei Bestrahlungsressourcen 21a, 21b dargestellt. Vorzugsweise weist die Vorrichtung aber weitere Bestrahlungsressourcen auf, bevorzugt mindestens vier Bestrahlungsressourcen. Vom Grundprinzip her können die einzelnen Bestrahlungsressourcen 21a, 21b gleichartig aufgebaut sein, wie dies hier als Beispiel in Figur 1 dargestellt ist. Dabei weist jede Bestrahlungsressource 21a, 21b einen eigenen Laser 22a, 22b als Strahlungsquelle 22a, 22b auf, welcher einen eigenen Laserstrahl L erzeugt. Dieser Laserstrahl L wird jeweils über eine eigene Umlenkvorrichtung 23a, 23b (auch Scanner 23a, 23b genannt) umgelenkt. Bei dieser Umlenkeinrichtung 23a, 23b kann es sich um ein ansteuerbares Spiegelsystem handeln. Weiter wird jeder Laserstrahl L dann durch eine Fokussiereinrichtung 24a, 24b, welche ebenfalls der Bestrahlungsressource 21a, 21b zugeordnet ist, in geeigneter Weise auf die Arbeitsebene 7 fokussiert. Die gesamte Bestrahlungsvorrichtung 20 befindet sich hier außerhalb der Prozesskammer 3, und die Laserstrahlen L werden jeweils über ein an der Oberseite der Prozesskammer 3 in der Kammerwandung 4 angebrachtes Einkoppelfenster 25 in die Prozesskammer 3 geleitet.

Bei den Lasern 22a, 22b kann es sich um Gas- oder Festkörperlaser oder jede andere Art von Laser wie z. B. Laserdioden handeln, insbesondere VCSEL (Vertical Cavity Surface Emitting Laser) oder VECSEL (Vertical External Cavity Surface Emitting Laser). Die Lasern 22a, 22b können gleichartig aber auch unterschiedlich aufgebaut sein. Auch ist es nicht zwingend erforderlich, dass alle Bestrahlungsressourcen 21a, 21b gleichartig aufgebaut sind.

Die Lasersintervorrichtung 1 enthält weiterhin eine Sensoranordnung 40, welche dazu geeignet ist, eine während des Auftreffens der Laserstrahlen L auf das Aufbaumaterial 13 in der Arbeitsebene 7 emittierte Prozessstrahlung zu erfassen. Diese Sensoranordnung 40 arbeitet dabei ortsaufgelöst, d. h. sie ist in der Lage, eine Art Emissionsbild der jeweiligen Schicht S zu erfassen. Vorzugsweise wird als Sensoranordnung 40 ein Bildsensor bzw. eine Kamera verwendet, welche im Bereich der emittierten Strahlung ausreichend sensitiv ist. Alternativ oder zusätzlich könnten auch ein oder mehrere Sensoren zur Erfassung einer optischen und/oder thermischen Prozessstrahlung genutzt werden, z. B. Photodioden, die die von dem auftreffenden Laserstrahlen L emittierte elektromagnetische Strahlung erfassen, oder Temperaturfühler zum Erfassen einer emittierten thermischen Strahlung. Eine Zuordnung des Signals eines selbst nicht ortsauflösenden Sensors zu den Koordinaten wäre möglich, indem die Koordinaten, die für die Ansteuerung des Laserstrahls genutzt werden, dem Sensorsignal jeweils zeitlich zugeordnet werden. In Figur 1 ist die Sensoranordnung 40 innerhalb der Prozesskammer 3 angeordnet. Sie könnte sich aber auch außerhalb der Prozesskammer 3 befinden und die Prozessstrahlung dann beispielsweise durch ein weiteres Fenster in der Prozesskammer 3 erfassen.

Die von der Sensoranordnung 40 erfassten Messsignale MS werden hier an eine Steuereinrichtung 30 der Lasersintervorrichtung 1 übergeben, welche auch dazu dient, die verschiedenen Komponenten der Lasersintervorrichtung 1 zur gesamten Steuerung des additiven Fertigungsprozesses anzusteuern. Hierzu weist die Steuereinrichtung 30 eine Messsignalschnittstelle 33 auf, an der die Messsignale MS aus dem Prozessraum 3 übernommen werden. Diese können dann von einer Messsignalauswertungseinheit 34 dahingehend ausgewertet werden, ob es zu Störungen innerhalb des Fertigungsprozesses gekommen ist, beispielsweise ob bei einer gleichzeitigen Fertigung von mehreren Bauteilen eine weitere Fertigstellung eines der Bauteile nicht mehr sinnvoll ist, da unter Berücksichtigung der Messsignale MS zu erwarten ist, dass dieses Bauteil ohnehin Ausschuss ist.

Die Steuereinrichtung 30 weist hier eine Online-Steuerstrategiemodifikationseinheit 31 auf, welche die Komponenten der Bestrahlungsvorrichtung 20, also hier die einzelnen Bestrahlungsressourcen 21a, 21b und deren einzelnen Komponenten, nämlich die Laser 22a, 22b, die Umlenkvorrichtung 23a, 23b und die Fokussiervorrichtungen 24a, 24b, jeweils separat mittels passender Bestrahlungssteuerdaten BS ansteuern kann. Die Steuerstrategiemodifikationseinheit 31 gibt dabei die aktuellen Bestrahlungssteuerdaten BS so an die Komponenten der Bestrahlungsressourcen 21a, 21b aus, dass diese einer definierten Bestrahlungsstrategie ST folgen, wobei diese Bestrahlungsstrategie ST durch den erfindungsgemäßen Bestrahlungsdatensatz vorgegeben wird. Die Ausgabe der Bestrahlungssteuerdaten BS erfolgt hier über eine Datenschnittstelle 32, über die die einzelnen Bestrahlungsressourcen 21a, 21b bzw. deren Komponenten auch jeweils Funktionsrückmeldungen FR an die Steuereinrichtung 30 bzw. hier die Steuerstrategiemodifikationseinheit 31 übergeben können. Über eine Steuerschnittstelle 36 kann die Steuereinrichtung 30 auch mittels geeigneter Heizungssteuerdaten HS die Strahlungsheizung 17, mittels Beschichtungssteuerdaten SD den Beschichter 16 und mittels Trägersteuerdaten TS die Bewegung des Trägers 10 steuern.

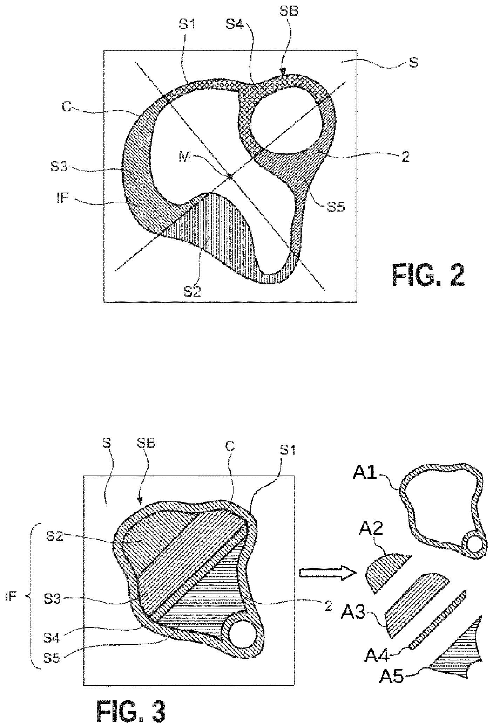

Die Steuereinrichtung 30 weist hier zudem eine Schnittstelle 35 auf, über die die ganze Vorrichtung 1, hier z. B. über einen Bus 50 oder eine andere Datenverbindung, mit einem Terminal 60 mit einem Display oder dergleichen gekoppelt sein kann. Über dieses Terminal 60 kann ein Bediener die Steuereinrichtung 30 und somit die gesamte Lasersintervorrichtung 1 steuern. Ebenso könnte die Vorrichtung 1 aber auch über eine in die Steuereinrichtung 30 integrierte Benutzerschnittstelle (nicht dargestellt) gesteuert werden. Insbesondere könnten mit Hilfe des Terminals 60 z. B. über den Bus 50 auch Prozesssteuerdaten PS, welche die Bestrahlungssteuerdaten BS gemäß einer Bestrahlungsstrategie ST, die Heizungssteuerdaten HS, die Beschichtungssteuerdaten SD oder die Trägersteuerdaten TS umfassen können, an die Steuervorrichtung 30 übermittelt werden. Die Bestrahlungsstrategie ST ist dabei durch den erfindungsgemäßen Bestrahlungssteuerdatensatz vorgegeben. Die Prozesssteuerdaten PS können insbesondere auch in einem Speicher 37 der Steuereinrichtung 30 für die weitere Verwendung hinterlegt sein. Ein möglicher Aufbau einer Bestrahlungsstrategie ST wird nachfolgend noch anhand von Figur 2 erläutert.

In diesem Ausführungsbeispiel umfasst der Terminal 60 eine erfindungsgemäße Steuerdatenerzeugungsvorrichtung 100. Mittels dieser wird aus computergenerierten 3D-Objekten welche zuvor scheibenweise zerlegt worden sind, ein optimierter Bestrahlungssteuerdatensatz erstellt, aus dem entsprechend optimierte Prozesssteuerdaten PS für die Lasersintervorrichtung erstellt werden können. Diese Steuerdatenerzeugungsvorrichtung 100 sowie ein Verfahren zur Erstellung eines entsprechenden Bestrahlungssteuerdatensatz wird im Folgenden anhand von Ausführungsbeispielen beschrieben.

Es wird an dieser Stelle noch einmal darauf hingewiesen, dass die vorliegende Erfindung nicht auf eine solche Lasersintervorrichtung 1 beschränkt ist. Sie kann auf beliebige andere Verfahren zum generativen bzw. additiven Herstellen eines dreidimensionalen Objekts durch schichtweises Aufbringen und selektives Verfestigen eines Aufbaumaterials angewendet werden, wobei mehrere Energiestrahlen von getrennt steuerbaren Bestrahlungsressourcen zum Verfestigen auf das zu verfestigende Aufbaumaterial abgegeben werden. Dementsprechend können auch die Bestrahlungsressourcen nicht nur, wie hier beschrieben, mit Lasern aufgebaut sein, sondern es könnte jede Bestrahlungsressource verwendet werden, mit der Energie als Wellen- oder Teilchenstrahlung selektiv auf bzw. in das Aufbaumaterial gebracht werden kann. Beispielsweise könnte anstelle der Laser andere Lichtquellen, Elektronenstrahlen etc. verwendet werden.

Auch wenn in Figur 1 nur ein einzelnes Objekt 2 dargestellt wird, ist es möglich und in der Regel auch üblich, mehrere Objekte in der Prozesskammer 3 bzw. im Behälter 5 parallel herzustellen. Dazu wird das Aufbaumaterial schichtweise an Stellen, die den Querschnitten der Objekte in der jeweiligen Schicht entsprechen, durch den Energiestrahl abgetastet.

Damit das Verfahren angewendet werden kann, muss zunächst eine Aufteilung des Bauteils 2 (bzw. der gleichzeitig gefertigten Bauteile 2) in Bauteilschichten und weiter in Schichtsegmente erfolgen. Diesen Schichtsegmenten (geometrische Objekte) ist stets ein einzelnes Arbeitspaket (Repräsentation des Schichtsegments oder Abfolge von Bauschritten) bzw. eine Mehrzahl von Arbeitspaketen zugeordnet.

Figur 2 zeigt die Aufteilung der Querschnittsfläche eines Bauteils 2 (Bauteilschicht SB) in einer Schicht S auf die verschiedenen Bestrahlungsressourcen so, dass eine möglichst gleichmäßige Aufteilung der Teilquerschnittsflächen zu den Bestrahlungsressourcen erfolgt. In Figur 3 wird die gesamte Querschnittsfläche durch zwei durch den Flächenmittelpunkt M verlaufende Trennlinien in vier Segmente aufgeteilt. Die Bauteilschicht SB umfasst dabei eine äußere Kontur C, die hier als ein einziges Schichtsegment S1 angesehen wird und einer Füllung (InFill IF), die in vier Schichtsegmente S2, S3, S4, S5 aufgeteilt wird. Im Rahmen der Bestrahlungsstrategie können dann die Schichtsegmente S1, S2, S3, S4, S5 durch verschiedene Bestrahlungsressourcen mittels Verfestigung von Aufbaumaterial erstellt werden.

Figur 3 zeigt eine andere mögliche Aufteilung der Querschnittsfläche eines Bauteils 2 (Bauteilschicht SB) in einer Schicht S in Schichtsegmente S1, S2, S3, S4, S5. In diesem Bauteil 2 ist die Kontur C im Unterschied zu Figur 2 nicht als dicke Linie, sondern als ein schraffierter Bereich dargestellt. Der InFill IF ist bei diesem Beispiel unterteilt, z.B. in Bereiche, in deren Übergang die Strahlung abgeschaltet wird. Die durchgezogenen Linien innerhalb des InFill IF sind nicht Teil des Bauteils, sondern stellen virtuelle Grenzen zwischen den Schichtsegmenten S2, S3, S4, S5 dar. Rechts ist die Zuordnung der Schichtsegmente S1, S2, S3, S4, S5 in Arbeitspakete A1, A2, A3, A4, A5 angedeutet. Es sollte jedoch beachtet werden, dass im Allgemeinen die Repräsentation der Schichtsegmente S1, S2, S3, S4, S5 nicht in Form geometrischer Objekte erfolgt (obwohl auch das möglich ist, sondern als abstrakte Objekte oder Bestrahlungsparameter bzw. Bauschritte. Mit den Arbeitspaketen A1, A2, A3, A4, A5 arbeitet das erfindungsgemäße Verfahren.

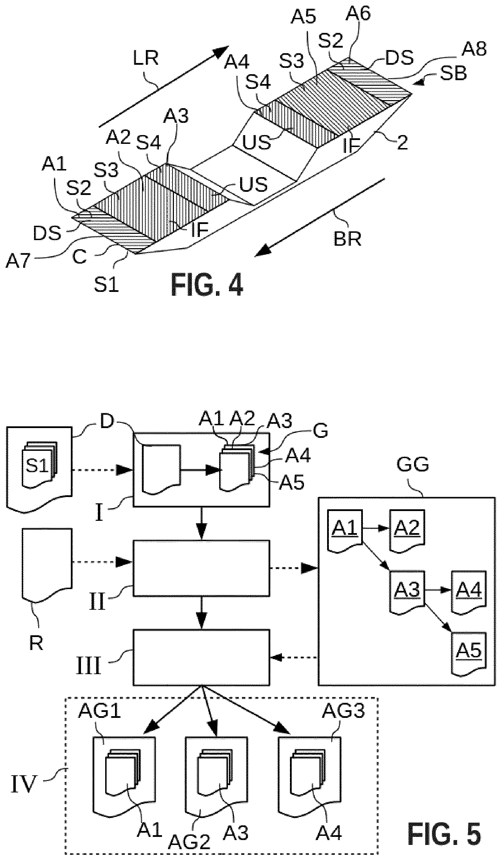

Figur 4 zeigt eine schematische Darstellung einer Bauteilschicht SB zur Verdeutlichung des Aufbaus eines gerichteten Graphen (s. dazu auch die folgenden Ausführungen). Das Bauteil 2 hat einen V-förmigen Aufbau, wobei es hier während seiner Fertigung zu sehen ist. Ein unterer Teil ist bereits aus verfestigtem Aufbaumaterial 13 (s. z.B. Figur 1) zu Bauteilschichten verfestigt worden und man sieht zuoberst die aktuell zu fertigende Bauteilschicht SB. Die Schichtsegmente S1, S2, S3, S4 betreffend die Kontur C, UpSkin US, DownSkin DS und InFill IF sind noch abzuarbeiten. Es ist hier zu beachten, dass die Schichtsegmente S1, S2, S3, S4 in diesem Beispiel nicht unbedingt zusammenhängende Flächen darstellen, sondern funktional unterschiedliche Bereiche der Bauteilschicht SB. Ein Schichtsegment S1 entspricht der Kontur C, ein Schichtsegment S2 entspricht der DownSkin DS, ein Schichtsegment S4 entspricht der UpSkin US und ein Schichtsegment S3 entspricht dem InFill IF. Den Schichtsegmenten S1, S2, S3, S4, sind jeweils Arbeitspakete A1, A2, A3, A4, A5, A6, A7, A8 zugeordnet.

Oben ist die Richtung eines Luftstromes LR in Form eines Pfeils angedeutet. Rauch, der durch die Fertigung eines Arbeitspaketes A1, A2, A3, A4, A5, A6 entstehen würde, weht in der Zeichnung also nach rechts oben. Es wäre somit von Vorteil, die Arbeitspakete A1, A2, A3, A4, A5, A6 gemäß der unten mit einem Pfeil angedeuteten Bearbeitungsrichtung herzustellen, da auf diese Weise keine Störung durch Rauch auftritt. Es sollte also zuerst das Arbeitspaket A6 rechts oben gefolgt von seinem benachbarten Arbeitspaket A5 und dessen benachbarten Arbeitspaket A4 hergestellt werden und danach die drei anderen Arbeitspakete auf gleiche Weise.

Hier könnten sich jedoch Konflikte ergeben, wenn vorgegeben ist, dass zuerst UpSkin US und DownSkin DS Schichtsegmente S2, S4 abgearbeitet werden müssen, bevor der jeweils innenliegende InFill IF bestrahlt werden kann. Ein möglicher Graph zur Bearbeitungsreihenfolge der Schichtsegmente S1, S2, S3, S4 könnte wie folgt aussehen: S1 → S2 → S3 → S4 und würde im Grunde eine Reihenfolgerelation R darstellen (s. z.B. Figur 5).

Figur 5 zeigt ein Flussdiagramm eines Ausführungsbeispiels eines erfindungsgemäßen Verfahrens zur Generierung eines Bestrahlungssteuerdatensatzes.

### Schritt I:

Als Eingangsdaten dienen die Schichtdaten D, deren Generierung im Stand der Technik bekannt ist. Diese Schichtdaten D umfassen z.B. eine geometrische Beschreibung der zu fahrenden Schmelzspuren sowie eine Zuordnung zu Bestrahlungsparametern (z. B. Belichtungsparametern) und Segmenten. Diese Schichtdaten D werden in Arbeitspakete A1, A2, A3, A4, A5 aufgeteilt, welche die Grundmenge G bilden. Für jedes dieser Arbeitspakete kann die zur Belichtung benötigte Zeit ermittelt werden.

### Schritt II:

Zwischen diesen Arbeitspaketen A1, A2, A3, A4, A5 werden Abhängigkeiten ermittelt, die als einfach gerichteter Graph GG gespeichert werden. Diese Abhängigkeiten werden durch die Reihenfolgerelation R vorgegeben, die als Regelwerk zur Erstellung des gerichteten Graphen GG angesehen werden kann. In dem dargestellten Graphen GG ist zu sehen, dass zuerst das Arbeitspaket A1 abgearbeitet werden muss (linker Knoten), bevor die Arbeitspakete A2 und A3 abgearbeitet werden können (mittlere Knoten), Arbeitspakete A4 und A5 (rechte Knoten) wiederum hängen von der Abarbeitung von Arbeitspaket A3 ab.

### Schritt III:

Es erfolgt eine Bewertung der Arbeitspakete A1, A2, A3, A4, A5, basierend auf dem Graphen GG, wobei nur diejenigen Arbeitspakete A1, A2, A3, A4, A5 ausgewählt werden, die auch bearbeitet werden können, z.B. diejenigen für die bereits alle Vorgänger abgearbei tet worden sind oder die keine Vorgänger besitzen, und diese ausgewählten Arbeitspakete bewertet werden. Zur Bewertung können Kriterien genutzt werden, die zu einer besseren Bauteilqualität oder einer höheren Aufbaurate führen.

### Schritt IV:

Die Arbeitspakete A1, A2, A3, A4, A5 werden auf die Bestrahlungsressourcen so verteilt, dass die in dem Graphen vorgegebene Reihenfolge berücksichtigt wird. Da in der Regel zuerst Datensätze erstellt werden und nicht direkt Bestrahlungsressourcen angesteuert werden, erfolgt die Verteilung dadurch, dass die Arbeitspakete A1, A2, A3, A4, A5 Arbeitspaketgruppen AG1, AG2, AG3 zugewiesen werden. Dazu wird jeweils das Arbeitspaket A1, A2, A3, A4, A5 zugeordnet, welches am besten bewertet worden ist.

Für die Ausgabe können die Arbeitspakete A1, A2, A3, A4, A5 als Maschinenbefehle spezifisch für eine Bestrahlungsressource ausgegeben werden. Nach der Zuweisung können auch ggf. noch weitere Berechnungen durchgeführt werden, um z.B. spezifisch für einen Belichter (Laser) Kalibrierwerte oder Koordinatentransformationen anzuwenden.

Für die Zuordnung zu den Lasern und der Bearbeitungsregeln können eine Reihe von verschachtelten Regeln angewendet werden, mit denen notwendige Bedingungen als auch bevorzugte Reihenfolgen und Zuordnungen abgebildet werden:
Regel 1: Fest definierte Reihenfolgenrelation, die immer eingehalten werden muss.
Regel 2 (optional): Reihenfolgewünsche eines Benutzers (zum Beispiel bevorzugte Belichtungsrichtung). Wenn diese zu Regel 1 im Widerspruch stehen, werden sie nicht berücksichtigt.
Regel 3 (optional): Vorgaben, welche Arbeitspakete von welcher Bestrahlungsressource bearbeitet werden darf (Arbeitsbereich, Art der Optik, Spotgröße, Laserleistung etc., manuell festgelegte Zuordnung), die immer eingehalten werden (ggf. durch Einfügung von Wartezeiten).
Regel 4 (optional): Wenn ein Laser die Belichtung eines Bauteils begonnen hat, werden von diesem Laser, soweit möglich, zunächst alle Arbeitspakete belichtet, die zu diesen Bauteilen gehören. Es darf aber ein neues Bauteil begonnen werden, wenn auf ein Arbeitspaket gewartet werden muss, das von einem anderen Laser belichtet werden muss (z.B. aufgrund von Regel 3).
Regel 5 (ggf. optional): Vorgaben, die festlegen, in welcher Reihenfolge die Arbeitspakete unter Einhaltung aller vorherigen Bedingungen abgearbeitet werden: Abstand zum Scanner, Lage entlang des Rauchabzuges, räumlicher Abstand zum vorherigen Arbeitspaket, Anzahl und/oder Dauer der nachfolgenden Arbeitspakete.
Regel 6 (optional): Bevorzugte Zuordnung zu einem bestimmten Laser (z.B. entsprechend dem Auftreffwinkel). Dies wird bevorzugt nur berücksichtigt, wenn sich die Bauzeit maximal um eine festgelegte Toleranz verlängert.

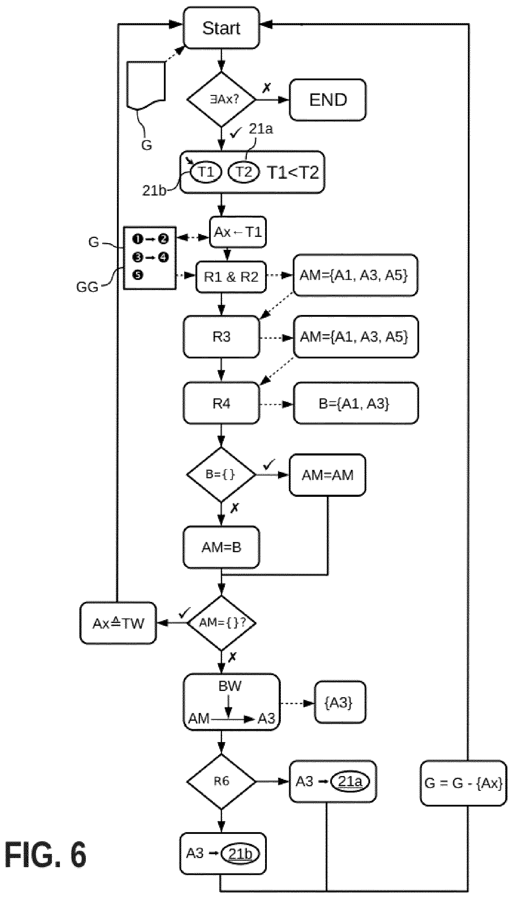

Figur 6 zeigt ein Flussdiagramm mit einer genaueren Darstellung eines Ausführungsbeispiels für Schritte III und IV aus Figur 5. In den einzelnen Schritten sind dabei Symbole zu sehen, welche diese Schritte charakterisieren.

Das Verfahren beginnt an einem Startpunkt ("Start"), an dem eine Grundmenge G von Arbeitspaketen A12, A2, A3, A4, A5 vorliegt (s. dazu z.B. Schritt I in Figur 5). Zu diesem Startpunkt findet das Verfahren in diesem Beispiel immer wieder zurück, wobei stets eine aktuelle Grundmenge (reduziert um bereits zugeordnete Arbeitspakete) betrachtet wird.

Im nächsten Schritt ("∃Ax") wird geprüft, ob es noch ein Arbeitspaket Ax gibt, für das die folgenden Schritte noch nicht durchlaufen wurden. Wenn es keines mehr gibt ("x"), dann endet das Programm, gibt es noch eines, werden die nachfolgenden Schritte durchlaufen. Das Verfahren läuft also über alle Arbeitspakete Ax der Grundmenge G.

Im nächsten Schritt werden die Erledigungszeiten T1, T2 der Bestrahlungsressourcen 21a, 21b ermittelt und miteinander verglichen. In dem dargestellten Beispiel ist T1 kleiner als T2 (was sich mit jedem neuen Durchlauf ändern kann) und es wird hier die Bestrahlungsressourcen 21b ausgewählt, welche die Erledigungszeit T1 hat (kleiner Pfeil im Kasten). In diesem Schritt wird immer diejenige Bestrahlungsressource 21a, 21b mit der kleinsten Erledigungszeit, also mit dem frühesten Fertigstellungszeitpunkt, ausgewählt.

Im nächsten Schritt ("Ax_{←}T1") werden die Arbeitspakete ermittelt, die nicht mehr in der Grundmenge enthalten sind, aber noch im Graphen GG. Wenn die Fertigstellungszeit eines dieser Arbeitspakete Ax vor der kleinsten Erledigungszeit liegt, wird es aus dem Graphen GG gelöscht. Dies wird durch den Doppelpfeil verdeutlicht. Es sollte an dieser Stelle beachtet werden, dass zugeordnete Arbeitspakete Ax nach ihrer Zuordnung zwar aus der Grundmenge G entfernt werden (Schritt "G=G-{Ax}"), in diesem Beispiel aber zunächst in dem gerichteten Graphen verbleiben. Diesen Schritt durchzuführen hat den Vorteil, dass hier nun zusätzlich noch berücksichtigt werden kann, ob zu einem Zeitpunkt der Fertigstellungszeit, der der kürzesten Erledigungszeit entspricht, das betreffende zugeordnete Arbeitspaket Ax überhaupt schon abgearbeitet worden ist (was unwahrscheinlich ist).

Alternativ kann z.B. eine Liste nachgehalten werden, in der die bereits zugewiesenen Arbeitspakete ihrer voraussichtlichen Fertigstellungszeit zugeordnet werden. Arbeitspakete, die aus dem Graphen entfernt werden, werden auch aus dieser Liste entfernt, damit in einem weiteren Durchlauf nicht nochmal versucht wird, dieses Arbeitselement aus dem Graphen zu löschen.

Im nachfolgenden Schritt wird nun der gerichtete Graph GG aus den Arbeitspaketen A1, A2, A3, A4, A5 der Grundmenge G, in den zusätzlich zur Regel 1 (notwendige Zuordnungsregeln R1) auch die Regel 2 (Benutzervorgaben R2) berücksichtigt wird, dazu verwendet, eine Auswahlmenge AM zu erstellen. Es werden dazu die Vorgänger des Graphen verwendet, die sich ebenfalls in der Grundmenge befinden (zugeordnete Arbeitspakete Ax, die noch abgearbeitet werden müssen, befinden sich im Graphen und "blockieren" ihre Nachfolger, sind aber nicht mehr in der Grundmenge enthalten). Rechts ist ein Beispiel für eine gefüllte Auswahlmenge AM mit den Mengenelementen {A1, A3, A5}. Für die Bestrahlungsressource mit dem frühesten Fertigstellungszeitpunkt wird also z.B. basierend auf dem Graphen GG die Menge der Arbeitspakete Ax ermittelt, für die zu dem Zeitpunkt schon alle vorausgesetzten Arbeitspakete (Regel 1 und 2) fertiggestellt wurden.

Im nachfolgenden Schritt wird Regel 3 (Zuordnungsregeln zu Bestrahlungsressourcen R3) als Filter der Auswahlmenge AM verwendet, wobei ein Arbeitspaket Ax nicht aufgenommen oder wieder entfernt wird, wenn es von der ausgewählten Bestrahlungsressource 21b nicht bestrahlt werden darf. In diesem Beispiel dürfen alle Arbeitspakete A1, A2, A3, A4, A5 von allen Bestrahlungsressourcen 21a, 21b bestrahlt werden und die Auswahlmenge AM bleibt unverändert. Aus der Auswahlmenge AM wird also die Menge A' der Arbeitspakete ermittelt, die nach Regel 3 von der Bestrahlungsressource bearbeitet werden dürfen und diese Menge A' ist die neue Auswahlmenge AM.

Im nachfolgenden Schritt kommt die optionale Regel 4 (Zuordnungsregeln zu einem Bauteil R4) als Filter der Auswahlmenge AM zur Anwendung. In diesem Beispiel könnte das Arbeitspaket A5 nicht aufgenommen bzw. wieder entfernt werden, da es nicht mit dem betreffenden Bauteil in Verbindung steht. Rechts daneben ist die Untermenge B dargestellt, welche nur noch die Elemente {A1, A2} umfasst und das Resultat der Regel 4 sein könnte.

Man kann die Modifizierung der Auswahlmenge gemäß Regel 4 mit den nachfolgenden Schritten erreichen, in dem geschaut wird, ob die Untermenge B leer ist ("B={}") und wenn ja, die Auswahlmenge unverändert beibehalten wird ("AM=AM") oder wenn nein die Untermenge B als neue Auswahlmange angesehen wird ("AM=B").

Danach wird in einem Schritt geschaut, ob noch überhaupt ein Element in der Auswahlmenge AM verblieben ist ("AM={}"). Wenn die Auswahlmenge leer sein sollte, wird an Stelle eines Arbeitspakets eine Wartezeit in die Arbeitspaketgruppe eingefügt (die wie ein Arbeitspaket bzw. ein Wartebefehl behandelt werden kann, daher "Ax ≙ TW"). Es ist dabei bevorzugt, dass die Dauer der Wartezeit so bemessen ist, dass das nächste Arbeitspaket abgeschlossen ist. Wenn die Auswahlmenge nicht leer ist, also ausgewählte Arbeitspakete vorhanden sind, schreitet das Verfahren weiter und gelangt zu Schritt IV der Figur 5.

Im nächsten Schritt werden die Arbeitspakete Ax der Auswahlmenge AM basierend auf einem Bewertungsregelwerk bewertet (s. z.B. Regel 5). In dem dargestellten Beispiel wird Arbeitspaket A3 ausgewählt. Dieses Arbeitspaket A3 könnte nun der Arbeitspaketgruppe der Bestrahlungsressource 21b zugeordnet werden. In dem hier dargestellten Beispiel findet davor jedoch noch ein zusätzlicher Optimierungsschritt statt.

Wenn die Bewertung auf Regel 5 basiert, werden die infrage kommenden Arbeitspakete Ax bevorzugt nach unterschiedlichen Kriterien bewertet, z.B. dem Abstand zum Scanner, der Lage entlang des Rauchabzuges, dem Abstand zum vorherigen Arbeitspaket, der Dauer und oder Anzahl der Arbeitspakete, die das betrachtete Arbeitspaket voraussetzen. Die unterschiedlichen Kriterien werden zu einer Bewertungszahl zusammengefasst, die einzelnen Kriterien werden bevorzugt mit wählbaren Faktoren gewichtet (Wichtungsfaktoren). Für die Zuweisung wird das Arbeitspaket mit der besten Bewertung ausgewählt.

Im Rahmen dieses Optimierungsschritts wird gemäß Regel 6 überprüft, ob eine andere Bestrahlungsressource 21a nicht doch besser zur Abarbeitung des Arbeitspakets A3 geeignet sein könnte, z.B. aufgrund des Auftreffwinkels. Ist dies der Fall, wird das Arbeitspaket A3 der anderen Bestrahlungsressource 21a bzw. deren Arbeitspaketgruppe zugeordnet, ansonsten der ursprünglich ausgewählten Bestrahlungsressource 21b.

Das zugeordnete Arbeitspaket Ax (hier Arbeitspaket A3) wird im Schritt "G=G-{Ax}" aus der Grundmenge gelöscht, damit es nicht zweimal zugeordnet wird.

Die Zuordnung wird in diesem Beispiel solange wiederholt, bis alle Arbeitspakete vergeben sind.

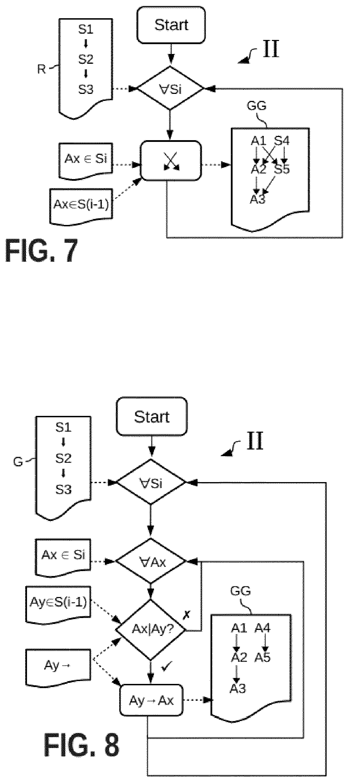

Figur 7 zeigt ein Flussdiagramm eines Ausführungsbeispiels zur Erstellung eines gerichteten Graphen GG ohne Berücksichtigung der Topologie. Der Aufbau eines solchen Abhängigkeitsgraphen kann anhand der reinen Zugehörigkeit zu bestimmten Bereichen erfolgen. Als Eingabe dient eine Liste, in der Schichtsegmente S1, S2, S3 in der gewünschten Reihenfolge enthalten sind. Diese Liste kann als Reihenfolgerelation R angesehen werden (s. z.B. Figur 5, in der dieses Verfahren in Schritt II durchgeführt werden könnte). Es werden nun die einzelne Schichtsegmente Si aus dieser Liste betrachtet.

In einer Schleife ("b'Si") werden alle Segmente beginnend mit dem zweiten Eintrag in der Liste durchlaufen.

Für jedes Arbeitspaket Ax, das zum vorherigen Segment Si-1 gehört (Liste: "AxεS(i-1)"), wird in dem Graphen GG eine Kante zu allen Arbeitspaketen, die zu dem momentan betrachteten Segment Si gehören (Liste: "AxεSi"), eingetragen. Diese Zuordnung ist in dem betreffenden Kasten mit zwei gekreuzten Pfeilen symbolisiert.

Figur 8 zeigt ein Flussdiagramm eines Ausführungsbeispiels zur Erstellung eines weiteren gerichteten Graphen GG, bei dem die Beziehungen auf topologisch zusammenhängende Bereiche beschränkt werden. Auch dieses Verfahren könnte in Schritt II der Figur 5 durchgeführt werden. Der Vorteil ist hier, dass die Anzahl der Abhängigkeiten zwischen den Arbeitspaketen Ax reduziert werden, so dass es mehr Möglichkeiten gibt, die Arbeitspakete Ax auf die Bestrahlungsressourcen aufzuteilen. Ähnlich wie in Figur 7 werden einzelne Schichtsegmente Si aus einer Liste betrachtet, in der Schichtsegmente S1, S2, S3 in der gewünschten Reihenfolge enthalten sind und alle Schichtsegmente Si in einer Schleife ("b'Si") beginnend mit dem zweiten Eintrag in der Liste durchlaufen.

Für jedes Arbeitspaket Ax, das zu dem betrachteten Schichtsegment Si gehört (Liste: "AxεSi"), werden Arbeitspakete Ay (Liste: "AxεS(i-1)") aus dem vorherigen Schichtsegment Si-1 ermittelt, die benachbart an Ax anliegen ("Ax|Ay"). Für alle Arbeitspakete Ay wird im Graphen GG eine Kante zu Arbeitspaket Ax hinzugefügt. Es wird dabei (Liste: "Ay→") Eine Liste mit anliegenden Vorläufern von Arbeitspaketen Ay verwendet. Auch bei dieser Variante ist der Graph GG stets frei von Zyklen.

Bei der Bestrahlungsreihenfolge kann es weitere Präferenzen geben, die möglicherweise im Widerspruch zu der schon vorgegebenen relativen Reihenfolge zwischen den Arbeitspaketen steht. Beispielsweise kann zur Vermeidung von Laser/Rauchinteraktionen gefordert werden, dass die Arbeitspakete entgegengesetzt zur Strömungsrichtung belichtet werden.

Figur 9 zeigt ein Flussdiagramm eines Ausführungsbeispiels zur Erstellung eines weiteren gerichteten Graphen GG. Auch dieses Verfahren könnte in Schritt II der Figur 5 durchgeführt werden. Dieses Flussdiagramm beschreibt einen Algorithmus, der Abhängigkeiten für Arbeitspakete in einem potentiell durch Rauch abgeschatteten Bereich einem gerichteten Graphen GG hinzufügt, wenn hierdurch kein Widerspruch entsteht. Als Eingabe dient eine Grundmenge G mit allen Arbeitspaketen Ax und der gerichtete Graph GG, der schon alle zwingend erforderlichen Abhängigkeiten, z.B. aufgrund der Belichtungsreihenfolge der Schichtsegmente, enthält. Zur Darstellung wurde die Grundmenge aus Figur 5 verwendet, wobei man sich hier N Arbeitspakete Ax vorstellen sollte, mit N»1. Für jedes der N Arbeitspakete Ax ("VAx") werden alle Arbeitspakete Ay ermittelt, die während der Belichtung von Arbeitspaket Ax potentiell von Rauch beschattet werden.

Es werden alle beschatteten Arbeitspakete durchlaufen ("VAy"), und für jedes Arbeitspaket Ay geprüft, ob eine vorherige Belichtung von Arbeitspaket Ax erforderlich ist. Nur wenn dies nicht der Fall ist, wird zum Graph GG eine Kante von Arbeitspaket Ay zu Arbeitspaket Ax hinzugefügt.

Es wird abschließend noch einmal darauf hingewiesen, dass es sich bei den vorhergehend detailliert beschriebenen Figuren lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass diese aus mehreren zusammenwirkenden Teil-Komponenten besteht, die gegebenenfalls auch räumlich verteilt sein können.

### Bezugszeichenliste

1 Vorrichtung zur additiven Fertigung / Lasersintervorrichtung
2 Fertigungsprodukt / Bauteil
3 Prozessraum / Prozesskammer
4 Kammerwandung
5 Behälter
6 Behälterwandung
7 Arbeitsebene
8 Baufeld
10 Träger
11 Grundplatte
12 Bauplattform
13 Aufbaumaterial
14 Vorratsbehälter
15 Aufbaumaterial
16 Beschichter
17 Strahlungsheizung
20 Bestrahlungsvorrichtung / Belichtungsvorrichtung
21a, 21b Bestrahlungsressource
22a, 22b Strahlungsquelle / Laser
23a, 23b Umlenkvorrichtung / Scanner
24a, 24b Fokussiereinrichtung
25 Einkoppelfenster
30 Steuereinrichtung
31 Steuerstrategiemodifikationseinheit
32 Datenschnittstelle
33 Messsignalschnittstelle
34 Messsignalauswertungseinheit
35 Schnittstelle
36 Steuerschnittstelle
37 Speicher
40 Sensoranordnung / Kamera 50 Bus
60 Terminal
100 Steuerdatenerzeugungsvorrichtung
101 Zuordnungseinheit
A1, A2, A3, A4, A5, A6, A7, A8, Ax, Ay Arbeitspaket
AM Auswahlmenge
BR Bearbeitungsrichtung
BS Bestrahlungssteuerdaten
BW Bewertungsregelwerk
C Kontur
D Schichtdaten
DS DownSkin
F Fertigungsprozess
FR Funktionsrückmeldung
H horizontale Richtung
HS Heizungssteuerdaten
IF InFill
L Laserstrahl
LR Richtung des Luftstroms
M Flächenmittelpunkt
MS Messsignal
P Arbeitspaket
PS Prozesssteuerdaten
R Reihenfolgerelation
S Schicht
SB Bauteilschicht
S1, S2, S3, S4, S5 Schichtsegment
SD Beschichtungssteuerdaten
ST Bestrahlungsstrategie
T1, T2 Erledigungszeit
TS Trägersteuerdaten
TW Wartezeit
US UpSkin
V vertikale Richtung

## Patentansprüche

1. Verfahren zur Generierung eines Bestrahlungssteuerdatensatzes zur Erstellung von Steuerdaten (PS) für eine Vorrichtung (1) zur additiven Fertigung einer Anzahl von Bauteilen (2) in einem Fertigungsprozess, in welchem wenigstens eine Schicht (S) eines Aufbaumaterials (13) in einen Prozessraum (3) eingebracht wird und das Aufbaumaterial (13) der Schicht (S) durch Bestrahlung von zumindest einem Teilbereich der Schicht (S) unter Verwendung einer Mehrzahl von Bestrahlungsressourcen (21a, 21b) selektiv zu mindestens einer Bauteilschicht (BS) verfestigt wird, umfassend die Schritte:
a) Bereitstellung von Schichtdaten (D) umfassend Daten zum Aufbau von Schichtsegmenten (S1, S2, S3, S4, S5) für eine Bauteilschicht (BS),
b) Aufteilung der Schichtdaten (D) auf mehrere Arbeitspakete (A1, A2, A3, A4, A5, A6, A7, A8) unter Bildung einer Grundmenge (G) der Arbeitspakete (A1, A2, A3, A4, A5, A6, A7, A8), **dadurch gekennzeichnet, dass** das Verfahren zusätzlich folgende Schritte umfasst:
c) Bereitstellung einer fest definierten Reihenfolgerelation (R) für Schichtsegmente (S1, S2, S3, S4, S5) oder für die Arbeitspakete (A1, A2, A3, A4, A5, A6, A7, A8),
d) Festlegung einer Bearbeitungsreihenfolge der Arbeitspakete (A1, A2, A3, A4, A5, A6, A7, A8) basierend zumindest auf der Reihenfolgerelation (R),
e) Ermittlung einer Erledigungszeit (T1, T2) für jede der Bestrahlungsressourcen (21a, 21b) für jeweils diejenige Arbeitspaketgruppe (AG1, AG2, AG3) der Arbeitspakete (A1, A2, A3, A4, A5, A6, A7, A8), die diesen Bestrahlungsressourcen (21a, 21b) bereits vorher zugeordnet worden sind,
f) Auswahl einer Bestrahlungsressource (21a, 21b) unter Berücksichtigung der für sie ermittelten Erledigungszeit (T1, T2), vorzugsweise derjenigen Bestrahlungsressource (21a, 21b) mit der jeweils kürzesten ermittelten Erledigungszeit (T1, T2),
g) Ermittlung einer Auswahlmenge (AM) von Arbeitspaketen (A1, A2, A3, A4, A5, A6, A7, A8) aus der Grundmenge (G) der Arbeitspakete (A1, A2, A3, A4, A5, A6, A7, A8), basierend auf der Reihenfolgerelation (R), wobei die Auswahlmenge (AM) diejenigen Arbeitspakete (A1, A2, A3, A4, A5, A6, A7, A8) umfasst, welche gemäß der Bearbeitungsreihenfolge bearbeitet werden können,
h) Auswahl eines Arbeitspakets (A1, A2, A3, A4, A5, A6, A7, A8) aus der Auswahlmenge (AM) unter Berücksichtigung eines vorgegebenen Bewertungsregelwerks (BW),
i) Zuordnung des ausgewählten Arbeitspakets (A1, A2, A3, A4, A5, A6, A7, A8) zu einer Arbeitspaketgruppe (AG1, AG2, AG3), welche der aktuell ausgewählten Bestrahlungsressource (21a, 21b) zugeordnet ist und Entfernen dieses Arbeitspakets (A1, A2, A3, A4, A5, A6, A7, A8) aus der Grundmenge (G) der Arbeitspakete (A1, A2, A3, A4, A5, A6, A7, A8),
j) Wiederholung zumindest der Schritte d) bis i) bis zu einem vorbestimmten Abbruchkriterium.

2. Verfahren nach Anspruch 1, wobei die Arbeitspakete (A1, A2, A3, A4, A5, A6, A7, A8) zusätzlich definierte Bestrahlungsparameter umfassen, zusätzlich umfassend die Schritte:
- Bereitstellung einer Zuordnungsrelation zur Zuordnung von Bestrahlungsparametern zu Bestrahlungsressourcen (21a, 21b),
- Filterung der Auswahlmenge der Arbeitspakete (A1, A2, A3, A4, A5, A6, A7, A8) basierend auf der Zuordnungsrelation und der zugeordneten Bestrahlungsparameter in Abhängigkeit von der ausgewählten Bestrahlungsressource (21a, 21b).

3. Verfahren nach einem der vorangehenden Ansprüche, wobei das Bewertungsregelwerk (BW) eine Bewertung für mindestens ein Kriterium der Gruppe
- räumlicher Abstand des Arbeitspakets (A1, A2, A3, A4, A5, A6, A7, A8) zur ausgewählten Bestrahlungsressource (21a, 21b),
- Anzahl der von der Erledigung des Arbeitspakets (A1, A2, A3, A4, A5, A6, A7, A8) abhängigen Arbeitspakete (A1, A2, A3, A4, A5, A6, A7, A8),
- Lage des Arbeitspakets (A1, A2, A3, A4, A5, A6, A7, A8) relativ zu einer räumlichen Ausdehnung eines ermittelten oder vordefinierten Rauchabzugbereichs,
- räumlicher Abstand des Arbeitspakets (A1, A2, A3, A4, A5, A6, A7, A8) zu einem vorher zugeordneten Arbeitspaket (A1, A2, A3, A4, A5, A6, A7, A8),
- Dauer der Arbeitspakete (A1, A2, A3, A4, A5, A6, A7, A8), die das betreffende Arbeitspaket (A1, A2, A3, A4, A5, A6, A7, A8) voraussetzen
- Abstand von Strahlen der Bestrahlungsressourcen (21a, 21b) zueinander,
umfasst, wobei bevorzugt basierend auf diesem Bewertungsregelwerk (BW) jeweils ein Bewertungswert berechnet wird, wobei das Bewertungsregelwerk (BW) dermaßen gestaltet ist, dass es dem mindestens einen Kriterium einen numerischen Wert zuordnet,
wobei besonders bevorzugt unterschiedlichen Kriterien zusätzlich unterschiedliche Wichtungen zugeordnet sind und/oder das Bewertungsregelwerk (BW) Kriterien unterschiedlich numerisch wichtet.

4. Verfahren nach einem der vorangehenden Ansprüche, wobei geprüft wird, ob das ausgewählte Arbeitspaket (A1, A2, A3, A4, A5, A6, A7, A8) auch von einer anderen Bestrahlungsressource (21a, 21b) bestrahlt werden kann und ob diese andere Bestrahlungsressource (21a, 21b) hinsichtlich eines vorbestimmten Kriteriums, insbesondere hinsichtlich eines Auftreffwinkels oder Auslenkungswinkels eines Strahls der Bestrahlungsressource (21a, 21b) und/oder eines räumlichen Abstands der Bestrahlungsressource (21a, 21b) zum Arbeitspaket (A1, A2, A3, A4, A5, A6, A7, A8), besser zur Erledigung des Arbeitspakets (A1, A2, A3, A4, A5, A6, A7, A8) geeignet ist, wobei in dem Falle, dass die andere Bestrahlungsressource (21a, 21b) besser geeignet ist, die andere Bestrahlungsressource (21a, 21b) zur ausgewählten Bestrahlungsressource (21a, 21b) wird und eine Zuordnung des ausgewählten Arbeitspakets (A1, A2, A3, A4, A5, A6, A7, A8) zu einer Arbeitspaketgruppe (AG1, AG2, AG3) erfolgt, welche dieser aktuell ausgewählten Bestrahlungsressource (21a, 21b) zugeordnet ist,
wobei bevorzugt die Erledigungszeiten (T1, T2) der betreffenden Bestrahlungsressourcen (21a, 21b) ohne das betreffende Arbeitspaket (A1, A2, A3, A4, A5, A6, A7, A8) miteinander verglichen werden und ein Wechsel der ausgewählten Bestrahlungsressource (21a, 21b) in dem Fall erfolgt, wenn sich die betreffenden Erledigungszeiten (T1, T2) maximal um eine vorgegebene Zeitspanne unterscheiden.

5. Verfahren nach einem der vorangehenden Ansprüche, wobei das Bewertungsregelwerk (BW) eine Kostenfunktion umfasst und die Bewertung, insbesondere Bewertungswerte, der Arbeitspakete (A1, A2, A3, A4, A5, A6, A7, A8) im Zuge einer Optimierung dieser Kostenfunktion ermittelt wird,
bevorzugt wobei diese Kostenfunktion
- eine Fertigstellungszeit und/oder
- die Erledigungszeiten (T1, T2) und/oder
- Kriterien und/oder eine Relevanz-Zuordnung gemäß Anspruch 3 und/oder
- ein vorbestimmtes Kriterium gemäß Anspruch 4
umfasst, und
bevorzugt wobei die Bewertung, insbesondere eine Ermittlung der Bewertungswerte, mittels einer iterativen Optimierung eines Ablaufplans, insbesondere der Fertigstellungszeit, erfolgt.

6. Verfahren nach einem der vorangehenden Ansprüche, wobei die Festlegung der Bearbeitungsreihenfolge der Arbeitspakete (A1, A2, A3, A4, A5, A6, A7, A8) zusätzlich gemäß einer Benutzervorgabe erfolgt,
und wobei bevorzugt nur Benutzervorgaben berücksichtigt werden, welche der Reihenfolgerelation (R) genügen,
bevorzugt wobei die Benutzervorgabe eine Vorgabe für eine Vorschubrichtung und/oder eine Vorgabe für eine Zuordnung einer Bestrahlungsressource (21a, 21b) zu einem Bauteil (2) umfasst.

7. Verfahren nach einem der vorangehenden Ansprüche, umfassend die Schritte:
- Ermittlung, ob Arbeitspakete (A1, A2, A3, A4, A5, A6, A7, A8) der Auswahlmenge (AM) und bereits der aktuell ausgewählten Bestrahlungsressource (21a, 21b) zugeordnete Arbeitspakete (A1, A2, A3, A4, A5, A6, A7, A8) eine Zugehörigkeit zu demselben Bauteil (2) aufweisen, und falls dies der Fall ist,
- Erstellung einer neuen Auswahlmenge (AM) umfassend die ermittelten Arbeitspakete (A1, A2, A3, A4, A5, A6, A7, A8) der Auswahlmenge (AM), welche die betreffende Zugehörigkeit aufweisen.

8. Verfahren nach einem der vorangehenden Ansprüche, wobei zur Festlegung der Bearbeitungsreihenfolge die Arbeitspakete (A1, A2, A3, A4, A5, A6, A7, A8) basierend auf der Reihenfolgerelation (R) in einem einfach gerichteten Graphen (GG) eingeordnet werden, und wobei bei der Ermittlung der Auswahlmenge (AM) von Arbeitspaketen (A1, A2, A3, A4, A5, A6, A7, A8) aus der Grundmenge (G) der Arbeitspakete (A1, A2, A3, A4, A5, A6, A7, A8) bevorzugt nur diejenigen Arbeitspakete (A1, A2, A3, A4, A5, A6, A7, A8) verwendet werden, zu deren Bearbeitung kein Arbeitspaket (A1, A2, A3, A4, A5, A6, A7, A8) des Graphen (GG) vorher abgearbeitet werden muss,
wobei bevorzugt die Grundmenge (G) der Arbeitspakete (A1, A2, A3, A4, A5, A6, A7, A8) der gerichtete Graph (GG) ist oder diesen umfasst.

9. Verfahren nach einem der vorangehenden Ansprüche, wobei in dem Fall, dass für die ausgewählte Bestrahlungsressource (21a, 21b) keine Arbeitspakete (A1, A2, A3, A4, A5, A6, A7, A8) gefunden werden können, aber noch nicht bearbeitete Arbeitspakete (A1, A2, A3, A4, A5, A6, A7, A8) vorhanden sind, dieser ausgewählten Bestrahlungsressource (21a, 21b) eine vorbestimmte Wartezeit (TW) an Stelle eines Arbeitspakets (A1, A2, A3, A4, A5, A6, A7, A8) zugeordnet wird.

10. Bestrahlungssteuerdatensatz, der mittels eines Verfahrens gemäß einem der vorangehenden Ansprüche erzeugt worden ist.

11. Verfahren zur additiven Fertigung zumindest einer Bauteilschicht zumindest eines Bauteils (31), umfassend die Schritte:
- Einbringen einer Schicht (S) eines Aufbaumaterials (13) in einen Prozessraum (3);
- Selektives Verfestigen des Aufbaumaterials (13) der Schicht (S) durch Bestrahlung von zumindest einem Teilbereich der Schicht (S) mittels einer Mehrzahl von Bestrahlungsressourcen (21a, 21b),
- Steuerung der Bestrahlungsressourcen (21a, 21b) mittels Steuerdaten (PS), welche unter Verwendung eines Bestrahlungssteuerdatensatzes gemäß Anspruch 10 erzeugt wurden.

12. Steuerdatenerzeugungsvorrichtung (100) zur Generierung eines Bestrahlungssteuerdatensatzes zur Erstellung von Steuerdaten (PS) für eine Vorrichtung (1) zur additiven Fertigung zumindest einer Anzahl von Bauteilen (2) in einem Fertigungsprozess, in welchem wenigstens eine Schicht (S) eines Aufbaumaterials (13) in einen Prozessraum (3) eingebracht wird und das Aufbaumaterial (13) der Schicht (S) durch Bestrahlung von zumindest einem Teilbereich der Schicht (S) unter Verwendung einer Mehrzahl von Bestrahlungsressourcen (21a, 21b) selektiv zu Bauteilschichten (BS) verfestigt wird,
umfassend eine Zuordnungseinheit (101) ausgelegt zur:
a) Verarbeitung von bereitgestellten Schichtdaten (D) umfassend Daten zum Aufbau von Schichtsegmenten (S1, S2, S3, S4, S5) für eine Bauteilschicht (BS),
b) Aufteilung der Schichtdaten (D) auf mehrere Arbeitspakete (A1, A2, A3, A4, A5, A6, A7, A8) unter Bildung einer Grundmenge (G) der Arbeitspakete (A1, A2, A3, A4, A5, A6, A7, A8), **dadurch gekennzeichnet, dass** die Zuordnungseinheit (101) weiterhin ausgelegt ist zur:
c) Bereitstellung einer fest definierten Reihenfolgerelation (R) für Schichtsegmente (S1, S2, S3, S4, S5) oder für die Arbeitspakete (A1, A2, A3, A4, A5, A6, A7, A8),
d) Festlegung einer Bearbeitungsreihenfolge der Arbeitspakete (A1, A2, A3, A4, A5, A6, A7, A8) basierend zumindest auf der Reihenfolgerelation (R),
e) Ermittlung einer Erledigungszeit (T1, T2) für jede der Bestrahlungsressourcen (21a, 21b) für jeweils diejenige Arbeitspaketgruppe (AG1, AG2, AG3) der Arbeitspakete (A1, A2, A3, A4, A5, A6, A7, A8), die diesen Bestrahlungsressourcen (21a, 21b) bereits vorher zugeordnet worden sind,
f) Auswahl einer Bestrahlungsressource (21a, 21b) unter Berücksichtigung der für sie ermittelten Erledigungszeit (T1, T2), vorzugsweise derjenigen Bestrahlungsressource (21a, 21b) mit der jeweils kürzesten ermittelten Erledigungszeit (T1, T2),
g) Ermittlung einer Auswahlmenge (AM) von Arbeitspaketen (A1, A2, A3, A4, A5, A6, A7, A8) aus der Grundmenge (G) der Arbeitspakete (A1, A2, A3, A4, A5, A6, A7, A8), basierend auf der Reihenfolgerelation (R), wobei die Auswahlmenge (AM) diejenigen Arbeitspakete (A1, A2, A3, A4, A5, A6, A7, A8) umfasst, welche gemäß der Bearbeitungsreihenfolge bearbeitet werden können,
h) Auswahl eines Arbeitspakets (A1, A2, A3, A4, A5, A6, A7, A8) aus der Auswahlmenge (AM) unter Berücksichtigung eines vorgegebenen Bewertungsregelwerks (BW),
i) Zuordnung des ausgewählten Arbeitspakets (A1, A2, A3, A4, A5, A6, A7, A8) zu einer Arbeitspaketgruppe (AG1, AG2, AG3), welche der aktuell ausgewählten Bestrahlungsressource (21a, 21b) zugeordnet ist und Entfernen dieses Arbeitspakets (A1, A2, A3, A4, A5, A6, A7, A8) aus der Grundmenge (G) der Arbeitspakete (A1, A2, A3, A4, A5, A6, A7, A8),
j) Wiederholung zumindest der Schritte d) bis i) bis zu einem vorbestimmten Abbruchkriterium.

13. Vorrichtung (1) zur additiven Fertigung zumindest einer Bauteilschicht (SB) zumindest eines Bauteils (2) in einem additiven Fertigungsprozess mit zumindest einer Zuführvorrichtung zum Einbringen einer Schicht (S) eines Aufbaumaterials (13) in einen Prozessraum (3), einer Mehrzahl von Bestrahlungsressourcen (21a, 21b) zum selektiven Verfestigen des Aufbaumaterials der Schicht durch Bestrahlung von zumindest einem Teilbereich der Schicht sowie einer Steuerdatenerzeugungsvorrichtung (100) nach Anspruch 12.

14. Steuerdaten (PS) zur Steuerung einer Vorrichtung (1) zur additiven Fertigung, wobei die Steuerdaten (PS) unter Verwendung eines Bestrahlungssteuerdatensatzes gemäß Anspruch 10 erzeugt wurden.

15. Computerprogrammprodukt mit einem Computerprogramm, welches direkt in eine Speichereinrichtung einer Steuerdatenerzeugungsvorrichtung (100) und/oder einer Steuereinrichtung (30) einer Vorrichtung (1) zur additiven Fertigung einer Bauteilschicht eines Bauteils (2) ladbar ist, mit Programmabschnitten, um alle Schritte des Verfahrens nach einem der Ansprüche 1 bis 9 auszuführen, wenn das Computerprogramm in der Steuerdatenerzeugungsvorrichtung (100) und/oder der Steuereinrichtung (30) ausgeführt wird.

## Claims

1. A method for generating an irradiation control data set for creating control data (PS) for a device (1) for additive manufacturing of a number of components (2) in a manufacturing process in which at least one layer (S) of a build material (13) is introduced into a process space (3) and the build material (13) of the layer (S) is selectively solidified to form at least one component layer (BS) by irradiating at least one section of the layer (S) using a plurality of irradiation resources (21a, 21b), comprising the steps:
a) providing layer data (D) comprising data for the build-up of layer segments (S1, S2, S3, S4, S5) for a component layer (BS),
b) dividing the layer data (D) into multiple work packages (A1, A2, A3, A4, A5, A6, A7, A8) while forming a basic set (G) of the work packages (A1, A2, A3, A4, A5, A6, A7, A8),
c) providing a firmly defined sequence relation (R) for layer segments (S1, S2, S3, S4, S5) or for the work packages (A1, A2, A3, A4, A5, A6, A7, A8), **characterized in that** the method additionally comprises the following steps:
d) specifying a processing sequence of the work packages (A1, A2, A3, A4, A5, A6, A7, A8) based at least on the sequence relation (R),
e) determining an execution time (T1, T2) for each of the irradiation resources (21a, 21b) for the respective work package group (AG1, AG2, AG3) of the work packages (A1, A2, A3, A4, A5, A6, A7, A8) which have previously been assigned to these irradiation resources (21a, 21b),
f) selecting an irradiation resource (21a, 21b) taking into account the execution time (T1, T2) determined for the irradiation resource (21a, 21b), preferably the irradiation resource (21a, 21b) with the respective shortest execution time (T1, T2),
g) determining a selection set (AM) of work packages (A1, A2, A3, A4, A5, A6, A7, A8) from the basic set (G) of work packages (A1, A2, A3, A4, A5, A6, A7, A8) based on the sequence relation (R), the selection set (AM) comprising those work packages (A1, A2, A3, A4, A5, A6, A7, A8) which can be processed according to the processing sequence,
h) selecting a work package (A1, A2, A3, A4, A5, A6, A7, A8) from the selection set (AM) taking into account a specified set of evaluation rules (BW),
i) assigning the selected work package (A1, A2, A3, A4, A5, A6, A7, A8) to a work package group (AG1, AG2, AG3) which is assigned to the currently selected irradiation resource (21a, 21b) and removing this work package (A1, A2, A3, A4, A5, A6, A7, A8) from the basic set (G) of work packages (A1, A2, A3, A4, A5, A6, A7, A8),
j) repeating at least steps d) to i) until a predetermined termination criterion is reached.

2. The method according to claim 1, wherein the work packages (A1, A2, A3, A4, A5, A6, A7, A8) additionally comprise defined irradiation parameters, additionally comprising the steps:
- providing an assignment relation for assigning irradiation parameters to irradiation resources (21a, 21b),
- filtering the selection set of work packages (A1, A2, A3, A4, A5, A6, A7, A8) based on the assignment relation and the assigned irradiation parameters depending on the selected irradiation resource (21a, 21b).

3. The method according to any one of the preceding claims, wherein the set of evaluation rules (BW) comprises an evaluation for at least one criterion of the group
- spatial distance of the work package (A1, A2, A3, A4, A5, A6, A7, A8) from the selected irradiation resource (21a, 21b),
- number of work packages (A1, A2, A3, A4, A5, A6, A7, A8) that depend on the execution of the work package (A1, A2, A3, A4, A5, A6, A7, A8),
- position of the work package (A1, A2, A3, A4, A5, A6, A7, A8) relative to a spatial extent of a determined or predefined smoke extraction area,
- spatial distance of the work package (A1, A2, A3, A4, A5, A6, A7, A8) relative to a previously assigned work package (A1, A2, A3, A4, A5, A6, A7, A8),
- duration of the work packages (A1, A2, A3, A4, A5, A6, A7, A8) which require the respective work package (A1, A2, A3, A4, A5, A6, A7, A8)
- distance of beams of the irradiation resources (21a, 21b) from each other,
wherein preferably based on this set of evaluation rules (BW), a respective evaluation value is calculated, wherein the set of evaluation rules (BW) is configured in such a way that it assigns a numerical value to the at least one criterion,
wherein particularly preferably, different weightings are additionally assigned to different criteria and/or the set of evaluation rules (BW) assigns different numerical weightings to criteria.

4. The method according to any one of the preceding claims, wherein it is checked whether the selected work package (A1, A2, A3, A4, A5, A6, A7, A8) can also be irradiated by another irradiation resource (21a, 21b) and whether this other irradiation resource (21a, 21b) is better suited for executing the work package (A1, A2, A3, A4, A5, A6, A7, A8) with respect to a predetermined criterion, in particular with respect to an angle of incidence or angle of deflection of a beam of the irradiation resource (21a, 21b) and/or a spatial distance of the irradiation resource (21a, 21b) from the work package (A1, A2, A3, A4, A5, A6, A7, A8), wherein in the case that the other irradiation resource (21a, 21b) is better suited, the other irradiation resource (21a, 21b) becomes the selected irradiation resource (21a, 21b) and an assignment of the selected work package (A1, A2, A3, A4, A5, A6, A7, A8) to a work package group (AG1, AG2, AG3) which is assigned to this currently selected irradiation resource (21a, 21b) takes place,
wherein preferably the execution times (T1, T2) of the respective irradiation resources (21a, 21b) without the respective work package (A1, A2, A3, A4, A5, A6, A7, A8) are compared with one another and a change of the selected irradiation resource (21a, 21b) takes place in the case where the respective execution times (T1, T2) differ maximally by a predetermined time span.

5. The method according to any one of the preceding claims, wherein the evaluation control system (BW) comprises a cost function and the evaluation, in particular evaluation values, of the work packages (A1, A2, A3, A4, A5, A6, A7, A8) is determined in the course of an optimization of this cost function,
wherein preferably this cost function comprises
- a completion time and/or
- the execution times (T1, T2) and/or
- criteria and/or a relevance assignment according to claim 3 and/or
- a predetermined criterion according to claim 4,
and
preferably wherein the evaluation, in particular a determination of the evaluation values, is performed by means of an iterative optimization of a schedule, in particular of the completion time.

6. The method according to any one of the preceding claims, wherein specifying the processing sequence of the work packages (A1, A2, A3, A4, A5, A6, A7, A8) is additionally carried out according to a user specification,
and wherein preferably only user specifications are taken into account which satisfy the sequence relation (R),
preferably wherein the user specification comprises a specification for a feed direction and/or a specification for an assignment of an irradiation resource (21a, 21b) to a component (2).

7. The method according to any one of the preceding claims, comprising the steps:
- determining whether work packages (A1, A2, A3, A4, A5, A6, A7, A8) of the selection set (AM) and work packages (A1, A2, A3, A4, A5, A6, A7, A8) already assigned to the currently selected irradiation resource (21a, 21b) have an affiliation to the same component (2), and if so,
- creating a new selection set (AM) comprising the determined work packages (A1, A2, A3, A4, A5, A6, A7, A8) of the selection set (AM) which have the respective affiliation.

8. The method according to any one of the preceding claims, wherein for specifying the processing sequence, the work packages (A1, A2, A3, A4, A5, A6, A7, A8) are arranged, based on the sequence relation (R), in a directed simple graph (GG), and wherein, when determining the selection set (AM) of work packages (A1, A2, A3, A4, A5, A6, A7, A8) from the basic set (G) of work packages (A1, A2, A3, A4, A5, A6, A7, A8), preferably only those work packages (A1, A2, A3, A4, A5, A6, A7, A8) are used for the processing, of which no work package (A1, A2, A3, A4, A5, A6, A7, A8) of the graph (GG) has to be processed beforehand,
wherein preferably the basic set (G) of the work packages (A1, A2, A3, A4, A5, A6, A7, A8) is or comprises the directed graph (GG).

9. The method according to any one of the preceding claims, wherein in the case that no work packages (A1, A2, A3, A4, A5, A6, A7, A8) can be found for the selected irradiation resource (21a, 21b), but work packages (A1, A2, A3, A4, A5, A6, A7, A8) are present that are not processed yet, this selected irradiation resource (21a, 21b) is assigned a predetermined waiting time (TW) instead of a work package (A1, A2, A3, A4, A5, A6, A7, A8).

10. An irradiation control data set that has been generated by means of a method according to any one of the preceding claims.

11. A method for additive manufacturing of at least one component layer of at least one component (31), comprising the steps:
- introducing a layer (S) of a build material (13) into a process space (3);
- selectively solidifying the build material (13) of the layer (S) by irradiating at least one section of the layer (S) by means of a plurality of irradiation resources (21a, 21b),
- controlling the irradiation resources (21a, 21b) by means of control data (PS) which have been generated using an irradiation control data set according to claim 10.

12. A control data generation device (100) for generating an irradiation control data set for creating control data (PS) for a device (1) for additive manufacturing of at least a number of components (2) in a manufacturing process in which at least one layer (S) of a build material (13) is introduced into a process space (3) and the build material (13) of the layer (S) is selectively solidified to form component layers (BS) by irradiating at least one section of the layer (S) using a plurality of irradiation resources (21a, 21b),
comprising an assignment unit (101) adapted for:
a) processing provided layer data (D) comprising data for the build-up of layer segments (S1, S2, S3, S4, S5) for a component layer (BS),
b) dividing of the layer data (D) into multiple work packages (A1, A2, A3, A4, A5, A6, A7, A8) while forming a basic set (G) of the work packages (A1, A2, A3, A4, A5, A6, A7, A8),
c) providing a firmly defined sequence relation (R) for layer segments (S1, S2, S3, S4, S5) or for the work packages (A1, A2, A3, A4, A5, A6, A7, A8), **characterized in that** the assignment unit (101) furthermore is adapted for:
d) specifying a processing sequence of the work packages (A1, A2, A3, A4, A5, A6, A7, A8) based at least on the sequence relation (R),
e) determining an execution time (T1, T2) for each of the irradiation resources (21a, 21b) for the respective work package group (AG1, AG2, AG3) of the work packages (A1, A2, A3, A4, A5, A6, A7, A8) which have previously been assigned to these irradiation resources (21a, 21b),
f) selecting an irradiation resource (21a, 21b) taking into account the execution time (T1, T2) determined for the irradiation resource (21a, 21b), preferably the irradiation resource (21a, 21b) with the shortest execution time (T1, T2) determined in each case,
g) determining a selection set (AM) of work packages (A1, A2, A3, A4, A5, A6, A7, A8) from the basic set (G) of work packages (A1, A2, A3, A4, A5, A6, A7, A8) based on the sequence relation (R), the selection set (AM) comprising those work packages (A1, A2, A3, A4, A5, A6, A7, A8) which can be processed according to the processing sequence,
h) selecting a work package (A1, A2, A3, A4, A5, A6, A7, A8) from the selection set (AM), taking into account a specified set of evaluation rules (BW),
i) assigning the selected work package (A1, A2, A3, A4, A5, A6, A7, A8) to a work package group (AG1, AG2, AG3) which is assigned to the currently selected irradiation resource (21a, 21b) and removing this work package (A1, A2, A3, A4, A5, A6, A7, A8) from the basic set (G) of work packages (A1, A2, A3, A4, A5, A6, A7, A8),
j) repeating at least steps d) to i) until a predetermined termination criterion is reached.

13. A device (1) for additive manufacturing of at least one component layer (SB) of at least one component (2) in an additive manufacturing process, comprising at least one supply device for introducing a layer (S) of a build material (13) into a process space (3), a plurality of irradiation resources (21a, 21b) for selectively solidifying the build material of the layer by irradiating at least one section of the layer, and a control data generating device (100) according to claim 12.

14. Control data (PS) for controlling a device (1) for additive manufacturing, wherein the control data (PS) have been generated using an irradiation control data set according to claim 10.

15. A computer program product comprising a computer program directly loadable into a storage device of a control data generating device (100) and/or a control device (30) of a device (1) for additive manufacturing of a component layer of a component (2), comprising program sections to carry out all steps of the method according to any one of claims 1 to 9 when the computer program is executed in the control data generating device (100) and/or the control device (30).

## Revendications

1. Procédé de génération d'un jeu de données de commande d'irradiation pour la création de données de commande (PS) pour un dispositif (1) de fabrication additive d'un certain nombre de composants (2) dans un processus de fabrication, lors duquel au moins une couche (S) d'un matériau de construction (13) est introduite dans un espace de processus (3) et le matériau de construction (13) de la couche (S) est consolidé de manière sélective en au moins une couche de composant (BS) par irradiation d'au moins une zone partielle de la couche (S) en utilisant une pluralité de ressources d'irradiation (21a, 21b), comprenant les étapes suivantes :
a) la fourniture de données de couche (D) comprenant des données sur la constitution de segments de couche (S1, S2, S3, S4, S5) pour une couche de composant (BS),
b) la répartition des données de couche (D) sur plusieurs paquets de travail (A1, A2, A3, A4, A5, A6, A7, A8) en formant une quantité de base (G) des paquets de travail (A1, A2, A3, A4, A5, A6, A7, A8), **caractérisé en ce que** le procédé comprend en outre les étapes suivantes :
c) la mise à disposition d'une relation de séquences (R) définie de manière fixe pour des segments de couche (S1, S2, S3, S4, S5) ou pour les paquets de travail (A1, A2, A3, A4, A5, A6, A7, A8),
d) la détermination d'une séquence de traitement des paquets de travail (A1, A2, A3, A4, A5, A6, A7, A8) sur la base au moins de la relation de séquences (R),
e) la détermination d'un temps d'exécution (T1, T2) pour chacune des ressources d'irradiation (21a, 21b) pour respectivement le groupe de paquets de travail (AG1, AG2, AG3) des paquets de travail (A1, A2, A3, A4, A5, A6, A7, A8), qui ont déjà été attribués auparavant auxdites ressources d'irradiation (21a, 21b),
f) la sélection d'une ressource d'irradiation (21a, 21b) en tenant compte du temps d'exécution (T1, T2) déterminé pour elle, de préférence de la ressource d'irradiation (21a, 21b) ayant le temps d'exécution (T1, T2) déterminé respectivement le plus court,
g) la détermination d'un ensemble de sélection (AM) de paquets de travail (A1, A2, A3, A4, A5, A6, A7, A8) à partir de l'ensemble de base (G) des paquets de travail (A1, A2, A3, A4, A5, A6, A7, A8), sur la base de la relation de séquences (R), l'ensemble de sélection (AM) comprenant les paquets de travail (A1, A2, A3, A4, A5, A6, A7, A8) qui peuvent être traités selon la séquence de traitement,
h) la sélection d'un paquet de travail (A1, A2, A3, A4, A5, A6, A7, A8) à partir de l'ensemble de sélection (AM) en tenant compte d'une réglementation d'évaluation (BW) prédéfinie
i) l'affectation du paquet de travail (A1, A2, A3, A4, A5, A6, A7, A8) sélectionné à un groupe de paquets de travail (AG1, AG2, AG3) affecté à la ressource d'irradiation actuellement sélectionnée (21a, 21b) et le retrait dudit paquet de travail (A1, A2, A3, A4, A5, A6, A7, A8) de l'ensemble de base (G) des paquets de travail (A1, A2, A3, A4, A5, A6, A7, A8),
j) la répétition d'au moins les étapes d) à i) jusqu'à un critère d'arrêt prédéterminé.

2. Procédé selon la revendication 1, lors duquel les paquets de travail (A1, A2, A3, A4, A5, A6, A7, A8) comprennent en outre des paramètres d'irradiation définis, comprenant en outre les étapes :
- de la mise à disposition d'une relation d'affectation pour l'affectation des paramètres d'irradiation à des ressources d'irradiation (21a, 21b),
- du filtrage de l'ensemble de sélection des paquets de travail (A1, A2, A3, A4, A5, A6, A7, A8) sur la base de la relation d'affectation et des paramètres d'irradiation affectés en fonction de la ressource d'irradiation (21a, 21b) sélectionnée.

3. Procédé selon l'une quelconque des revendications précédentes, lors duquel la règlementation d'évaluation (BW) comprend une évaluation pour au moins un critère du groupe comprenant
- la distance spatiale du paquet de travail (A1, A2, A3, A4, A5, A6, A7, A8) par rapport à la ressource d'irradiation sélectionnée (21a, 21b),
- le nombre de paquets de travail (A1, A2, A3, A4, A5, A6, A7, A8) dépendant de l'exécution des paquets de travail(A1, A2, A3, A4, A5, A6, A7, A8),
- la position du paquet de travail (A1, A2, A3, A4, A5, A6, A7, A8) par rapport à une extension spatiale d'une zone d'évacuation des fumées déterminée ou prédéfinie,
- la distance spatiale du paquet de travail (A1, A2, A3, A4, A5, A6, A7, A8) par rapport à un paquet de travail (A1, A2, A3, A4, A5, A6, A7, A8) précédemment affecté,
- la durée des paquets de travail (A1, A2, A3, A4, A5, A6, A7, A8) qui présupposent le paquet de travail concerné (A1, A2, A3, A4, A5, A6, A7, A8)
- la distance entre les faisceaux des ressources d'irradiation (21a, 21b),
de préférence une valeur d'évaluation étant calculée respectivement sur la base de ladite règlementation d'évaluation (BW), la réglementation d'évaluation (BW) étant conçue de telle sorte qu'elle affecte une valeur numérique à au moins un critère,
de manière particulièrement préférentielle, des pondérations différentes étant en outre affectées à différents critères et / ou la règlementation d'évaluation (BW) pondérant numériquement de manière différente des critères.

4. Procédé selon l'une quelconque des revendications précédentes, lors duquel l'on vérifie si le paquet de travail (A1, A2, A3, A4, A5, A6, A7, A8) sélectionné peut également être irradié par une autre ressource d'irradiation (21a, 21b) et si cette autre ressource d'irradiation (21a, 21b) en ce qui concerne un critère prédéterminé, notamment en ce qui concerne un angle d'incidence ou un angle de déviation d'un faisceau de la ressource d'irradiation (21a, 21b) et / ou une distance spatiale de la ressource d'irradiation (21a, 21b) par rapport au paquet de travail (A1, A2, A3, A4, A5, A6, A7, A8), est mieux adaptée pour exécuter le paquet de travail (A1, A2, A3, A4, A5, A6, A7, A8), dans le cas où l'autre ressource d'irradiation (21a, 21b) est mieux adaptée, l'autre ressource d'irradiation (21a, 21b) devenant la ressource d'irradiation sélectionnée (21a, 21b) et une affectation du paquet de travail (A1, A2, A3, A4, A5, A6, A7, A8) sélectionné à un groupe de paquets de travail (AG1, AG2, AG3), qui est affecté à ladite ressource d'irradiation actuellement sélectionnée (21a, 21b), ayant lieu,
de préférence les temps d'exécution (T1, T2) des ressources d'irradiation (21a, 21b) concernées étant comparés entre eux sans le paquet de travail (A1, A2, A3, A4, A5, A6, A7, A8) concerné et un changement de la ressource d'irradiation (21a, 21b) sélectionnée ayant lieu dans le cas où les temps d'exécution (T1, T2) concernés diffèrent au maximum d'un laps de temps prédéterminé.

5. Procédé selon l'une quelconque des revendications précédentes, la règlementation d'évaluation (BW) comprenant une fonction de coûts et l'évaluation, en particulier des valeurs d'évaluation des paquets de travail (A1, A2, A3, A4, A5, A6, A7, A8) étant déterminée au cours d'une optimisation de ladite fonction de coûts,
de préférence, ladite fonction de coût comprenant
- un délai d'achèvement et / ou
- les temps d'exécution (T1, T2) et / ou
- des critères et / ou une affectation de pertinence selon la revendication 3, et / ou
- un critère prédéterminé selon la revendication 4
et
de préférence, l'évaluation, en particulier une détermination des valeurs d'évaluation, étant effectuée au moyen d'une optimisation itérative d'un plan de déroulement, notamment du temps d'achèvement.

6. Procédé selon l'une quelconque des revendications précédentes, lors duquel la détermination de la séquence de traitement des paquets de travail (A1, A2, A3, A4, A5, A6, A7, A8) s'effectue en outre conformément à une consigne d'utilisateur,
et ne sont prises en compte de préférence que les consignes de l'utilisateur qui satisfont à la relation de séquence (R),
de préférence, la consigne de l'utilisateur comprenant une consigne pour une direction d'avance et / ou une consigne pour une affectation d'une ressource d'irradiation (21a, 21b) à un composant (2).

7. Procédé selon l'une quelconque des revendications précédentes, comprenant les étapes:
- de la détermination si des paquets de travail (A1, A2, A3, A4, A5, A6, A7, A8) de l'ensemble de sélection (AM) et des paquets de travail (A1, A2, A3, A4, A5, A6, A7, A8) déjà affectés à la ressource d'irradiation (21a, 21b) actuellement sélectionnée présentent une appartenance au même composant (2),et si le cas se présente,
- de la création d'un nouvel ensemble de sélection (AM) comprenant les paquets de travail déterminés (A1, A2, A3, A4, A5, A6, A7, A8) de l'ensemble de sélection (AM), qui présentent l'appartenance concernée.

8. Procédé selon l'une quelconque des revendications précédentes, lors duquel, pour déterminer la séquence de traitement, les paquets de travail (A1, A2, A3, A4, A5, A6, A7, A8) sont classés dans un graphe (GG) unidirectionnel sur la base de la relation de séquence (R) et lors duquel, lors de la détermination de l'ensemble de sélection (AM) de paquets de travail (A1, A2, A3, A4, A5, A6, A7, A8) à partir de l'ensemble de base (G) de paquets de travail (A1, A2, A3, A4, A5, A6, A7, A8), l'on n'utilise de préférence que les paquets de travail (A1, A2, A3, A4, A5, A6, A7, A8) pour le traitement desquels aucun paquet de travail (A1, A2, A3, A4, A5, A6, A7, A8) du graphe (GG) ne doit être traité auparavant,
de préférence, l'ensemble de base (G) des paquets de travail (A1, A2, A3, A4, A5, A6, A7, A8) étant le graphe orienté (GG) ou comprenant celui-ci.

9. Procédé selon l'une quelconque des revendications précédentes, lors duquel, dans le cas où aucun paquet de travail (A1, A2, A3, A4, A5, A6, A7, A8) ne peut être trouvé pour la ressource d'irradiation (21a, 21b) sélectionnée, mais des paquets de travail (A1, A2, A3, A4, A5, A6, A7, A8) non encore traités sont présents, un temps d'attente prédéterminé (TW) est affecté à ladite ressource d'irradiation sélectionnée (21a, 21b) en remplacement d'un paquet de travail (A1, A2, A3, A4, A5, A6, A7, A8).

10. Ensemble de données de contrôle d'irradiation qui a été généré au moyen d'un procédé selon l'une quelconque des revendications précédentes.

11. Procédé de fabrication additive d'au moins une couche de composant d'au moins un composant (31), comprenant les étapes :
- de l'introduction d'une couche (S) d'un matériau de construction (13) dans un espace de processus (3) ;
- de la consolidation sélective du matériau de construction (13) de la couche (S) par irradiation d'au moins une zone partielle de la couche (S) au moyen d'une pluralité de ressources d'irradiation (21a, 21b),
- de la commande des ressources d'irradiation (21a, 21b) au moyen de données de commande (PS) qui ont été générées en utilisant un ensemble de données de commande d'irradiation selon la revendication 10.

12. Dispositif de génération de données de commande (100) pour la génération d'un jeu de données de commande d'irradiation pour la création de données de commande (PS) pour un dispositif (1) de fabrication additive d'au moins un certain nombre de composants (2) dans un processus de fabrication, lors duquel au moins une couche (S) d'un matériau de construction (13) est introduite dans un espace de processus (3) et le matériau de construction (13) de la couche (S) est consolidé de manière sélective en des couches de composants (BS) par irradiation d'au moins une zone partielle de la couche (S) en utilisant une pluralité de ressources d'irradiation (21a, 21b),
comprenant une unité d'affectation (101) conçue pour :
a) le traitement de données de couche (D) mises à disposition, comprenant des données pour la construction de segments de couche (S1, S2, S3, S4, S5) pour une couche de composant (BS),
b) la répartition des données de couche (D) sur plusieurs paquets de travail (A1, A2, A3, A4, A5, A6, A7, A8) en formant une quantité de base (G) des paquets de travail (A1, A2, A3, A4, A5, A6, A7, A8), **caractérisé en ce que** l'unité d'affectation (101) est en outre conçue pour :
c) la mise à disposition d'une relation de séquence (R) fixement définie pour des segments de couche (S1, S2, S3, S4, S5) ou pour les paquets de travail (A1, A2, A3, A4, A5, A6, A7, A8),
d) la fixation d'une séquence de traitement des paquets de travail (A1, A2, A3, A4, A5, A6, A7, A8) sur la base au moins de la relation de séquences (R),
e) la détermination d'un temps d'exécution (T1, T2) pour chacune des ressources d'irradiation (21a, 21b) pour respectivement le groupe de paquets de travail (AG1, AG2, AG3) des paquets de travail (A1, A2, A3, A4, A5, A6, A7, A8) qui ont déjà été affectés auparavant auxdites ressources d'irradiation (21a, 21b),
f) la sélection d'une ressource d'irradiation (21a, 21b) en tenant compte du temps d'exécution (T1, T2) qui a été déterminé pour elle, de préférence de la ressource d'irradiation (21a, 21b) ayant le temps d'exécution (T1, T2) déterminé respectivement le plus court,
g) la détermination d'un ensemble de sélection (AM) de paquets de travail (A1, A2, A3, A4, A5, A6, A7, A8) à partir de l'ensemble de base (G) des paquets de travail (A1, A2, A3, A4, A5, A6, A7, A8), sur la base de la relation de séquence (R), l'ensemble de sélection (AM) comprenant les paquets de travail (A1, A2, A3, A4, A5, A6, A7, A8) qui peuvent être traités selon la séquence de traitement,
h) la sélection d'un paquet de travail (A1, A2, A3, A4, A5, A6, A7, A8) dans l'ensemble de sélection (AM) en tenant compte d'une réglementation d'évaluation (BW) prédéfinie,
i) l'affectation du paquet de travail (A1, A2, A3, A4, A5, A6, A7, A8) sélectionné à un groupe de paquets de travail (AG1, AG2, AG3) qui est affecté à la ressource d'irradiation (21a, 21b) actuellement sélectionnée et le retrait dudit paquet de travail (A1, A2, A3, A4, A5, A6, A7, A8) de l'ensemble de base (G) des paquets de travail (A1, A2, A3, A4, A5, A6, A7, A8),
j) la répétition d'au moins les étapes d) à i) jusqu'à un critère d'arrêt prédéterminé.

13. Dispositif (1) pour la fabrication additive d'au moins une couche de composant (SB) d'au moins un composant (2) dans un processus de fabrication additive, pourvu d'au moins un dispositif d'alimentation pour l'introduction d'une couche (S) d'un matériau de construction (13) dans un espace de processus (3), d'une pluralité de ressources d'irradiation (21a, 21b) pour la consolidation sélective du matériau de construction de la couche par irradiation d'au moins une zone partielle de la couche ainsi que d'un dispositif de génération de données de commande (100) selon la revendication 12.

14. Données de commande (PS), destinées à commander un dispositif de fabrication additive (1), les données de commande (PS) ayant été générées en utilisant un ensemble de données de commande d'irradiation selon la revendication 10.

15. Produit de programme d'ordinateur pourvu d'un programme d'ordinateur pouvant être chargé directement dans un dispositif de mémoire d'un dispositif de génération de données de commande (100) et/ou d'un dispositif de commande (30) d'un dispositif (1) pour la fabrication additive d'une couche de composant d'un composant (2), avec des sections de programme destinées à exécuter toutes les étapes du procédé selon l'une des revendications 1 à 9, lorsque le programme d'ordinateur est exécuté dans le dispositif de génération de données de commande (100) et/ou dans le dispositif de commande (30).
